(19) Europäisches Patentamt / European Patent Office / Office européen des brevets

(11) **EP 1 587 031 B1**

(12) **EUROPEAN PATENT SPECIFICATION**

(45) Date of publication and mention
of the grant of the patent:
**30.05.2018 Bulletin 2018/22**

(51) Int Cl.:
**G06T 3/40** *(2006.01)*          **H04N 1/21** *(2006.01)*

(21) Application number: **05252386.7**

(22) Date of filing: **15.04.2005**

(54) **Image pickup apparatus and image pickup method**

Verfahren und Vorrichtung zur Bildaufnahmen

Appareil et méthode de prise d'images

(84) Designated Contracting States:
**DE FR GB**

(30) Priority: **16.04.2004   JP 2004122176**

(43) Date of publication of application:
**19.10.2005   Bulletin 2005/42**

(73) Proprietor: **Sony Corporation**
**Tokyo (JP)**

(72) Inventors:
• **Shioya, Hiroyuki**
**Tokyo (JP)**
• **Ohki, Mitsuharu**
**Tokyo (JP)**

(74) Representative: **D Young & Co LLP**
**120 Holborn**
**London EC1N 2DY (GB)**

(56) References cited:
**EP-A1- 0 884 896       EP-A2- 0 534 438**
**WO-A1-99/12341       JP-A- 2002 006 426**
**US-A- 6 133 943**

**Description**

The present invention contains subject matter related to Japanese Patent Application JP 2004-122176 filed in the Japanese Patent Office on April 16, 2004, and Japanese Patent Application JP 2005-021893 filed in the Japanese Patent Office on January 28, 2005.

The field of this invention relates to an image pickup apparatus and an image pickup method , preferred embodiments of the invention relate to an image pick up apparatus and method for generating a panoramic whole image by gradually shifting the image pickup direction and pasting a plurality of picked up image regions together side by side.

Electronic still cameras have been and are being popularly used. They are designed to convert the rays of light that pass through the lens of the camera as the camera shoots the object to be imaged by means of a solid state imaging element such as CCD into video signals, record the video signals on a recording medium and, if required, reproduce the recorded video signals. Many electronic still cameras are provided with a monitor screen so that the user can display a selected one of the still images that have been picked up and recorded. However, known electronic still cameras can shoot only a narrow scenic range that is limited by the view angle of the lens of the camera. In other words, the electronic camera cannot shoot a wide scenic range beyond the view angle of the lens.

In view of the above-identified circumstances, camera systems for obtaining a panoramic image have been proposed in recent years. Such camera systems are classified into the multiple lens type adapted to shoot a wide scenic range at a time and the single lens type adapted to gradually shift the image pickup direction and serially and continuously pick up unit images.

While the multiple lens type camera has an advantage that it can be handled like an ordinary camera to generate a panoramic whole image at a time, it has a drawback that the entire camera system is costly.

On the other hand, the single lens type camera (see, inter alia, Patent Document 1: Jpn. Pat. Appln. Laid-Open Publication No. 11-46317) is less costly but requires an image processing technique of generating a single panoramic whole image by bonding the unit images that are serially and continuously picked up together in such a way that the boundaries of the unit images are not noticeable. More specifically, since the image pickup direction has to be shifted gradually for shooting, the individual visual fields to be shot by the camera differ from each other. Therefore, the camera has to estimate and correct the positional displacement of any two adjacent unit images by using pattern matching or the like. There have also been proposed techniques for selecting optimal unit images on the basis of the boundary lines obtained by using a Voronoi division method relating to the distance from the center of each unit image in order to produce a panoramic whole image out of unit images that overlap each other to a certain extent. Furthermore, techniques for smoothing linking adjacent unit images have been proposed, using the average pixel values of image regions that partly overlap each other. Techniques for selecting optimal unit images by using median filters have also been proposed.

Meanwhile, single lens camera systems are accompanied by a problem that discontinuous parts are produced in the boundary regions of adjacent unit images obtained as a result of serial and continuous shootings to make the unit images appear as if they are sheared when there is a moving object in the unit images. Then, ultimately the generated panoramic whole image shows incoherence.

This problem can be reduced when a large number of unit images are picked up in a very short period of time. To shoot a panoramic wide area in a short period of time, it is inevitably necessary to raise the slewing speed of the camera module comprising a single lens and an imaging element horizontally or vertically. However, the produced image can be blurred when the slewing speed of the camera module is too fast. To suppress such blurs, it is necessary to highly precisely synchronize the shooting operation and the moving operation of the camera module or employ a control system comprising a camera shake correction mechanism so that the camera module stands still when it shoots the object. However, such an arrangement makes the entire camera system costly.

A panorama electronic still camera proposed in Patent Document 2 (Jpn. Pat. Appln. Laid-Open Publication No. 6-225202) comprises a means for turning the camera, interlocking the turning motion and the operation of reading the image signal generated by and read out from the imaging element. The camera requires a piece of hardware that repeats a cycle of slewing and stopping the camera accurately at high speed. In other words, the invention of Patent Document 2 cannot suppress the cost of the entire camera system.

In order to shoot a panoramic scenery entirely in a short period of time, it is inevitably necessary to raise the shutter speed. However, a too fast shutter speed of known panorama electronic still cameras makes the obtained image a dark and noisy one. In other words, a too fast shutter speed does not allow to produce a high quality image.

Image pickup apparatus adapted to pick up a plurality of unit images for a wide scene by means of a single lens for the purpose of obtaining a panoramic whole image have been proposed. However, any of the known image pickup apparatus that have been proposed in the past cannot realize a functional feature of being capable of obtaining a high quality panoramic whole image, while maintaining the economic advantage of commercially available digital cameras.

For example, FIG. 2 of Patent Document 2 discloses a camera having a functional feature of picking up a panoramic whole image and a rotary adaptor to be attached to the imaging section of the camera. The rotary adaptor takes the role of operating as drive source for driving the imaging section of the camera to turn. However, it gives rise to a number of problems when it is actually operated.

The first problem is that the camera is designed without properly taking the balance of the mass of the camera into consideration. The adaptor of the known camera takes the role of driving the imaging section of the camera to turn and is mounted on the camera to turn the camera main body itself. While it is ideal to turn only the lens and the necessary part of the imaging sensor, the known camera is designed to turn the camera main body itself that carries heavy parts including a battery. As a result, costly components have to be used to bear the rotary motion of the motor. Additionally, when the camera main body is hand-held for shooting, the user of the camera feels it cumbersome to hold the camera because the part held by hand is lightweight and the rotary part of the camera is heavy to make the balance of the mass of the camera inappropriate.

The second problem is that the user cannot operate the buttons of the camera and see the image being displayed on the display screen of the camera with ease. More specifically, various buttons including the shutter button and a display section are arranged on the camera main body that is driven to turn. When the user operates any of the buttons of the camera while he or she is turning the imaging section of the camera, the obtained image can be blurred to make the shooting operation unsuccessful. While such blurs may be avoided by using a release, it is not a general practice to use a release for a commercially available economic digital camera.

Additionally, since the display section of the camera also turns with the rotary motion of the imaging section of the camera, the user is required to follow the turning motion of the display section in order to visually confirm the shooting operation. Such a motion on the part of the user is also cumbersome to the user.

Furthermore, it is also cumbersome to the user to carry around the rotary adaptor that is not used frequently and only required to use when taking a panoramic picture. The camera system will be far from being compact and easy to carry if the rotary adaptor is constantly fitted to the camera main body.

Thus, rotary adaptors that are designed to be used for taking panoramic images have not been popular at all.

Patent Document 3 (Japanese Patent Publication No. 3348285) describes an apparatus comprising a turntable arranged on a fixed base so that a camera system may be rotated by 360° for taking a panoramic picture by means of the apparatus. The apparatus is designed exclusively for taking panoramic pictures. The apparatus also comprises a photo-coupler for connecting a camera and a downstream processing section when shooting a visual field of 360° in a serial and continuously shooting session and a rotary angle sensor for gauging the rotary angle of the turntable to consequently make the apparatus very bulky and complex.

However, if such an apparatus is fitted to a commercially available ordinary economic digital camera in order to provide the camera with a functional feature of being capable of obtaining a panoramic whole image, the cost will inevitably be prohibitive. Additionally, such a known apparatus is designed to be arranged on a tripod and connected to an external computer for use. Therefore, it adversely affects a commercially available economic digital camera in terms of portability if it is fitted to the camera. Thus, it is not realistic to provide an ordinary camera with such a large and bulky apparatus.

Furthermore, when the user tries to obtain a panoramic image by shooting a wide scenic range serially and continuously, while rotating or moving a camera of Patent Document 3, and pasting a plurality of picked up images together side by side, there arises a problem that the panoramic image is blurred in the turning direction or the moving direction of the camera.

Other prior art includes US6133943A and EP0534438A2.

In view of the above identified problems of the prior art, it is desirable to provide an image pickup apparatus and an image pickup method that can pick up as many images of a scenic range as possible within a short period of time to alleviate the problem that discontinuous parts are produced in the boundary regions of adjacent unit images and avoid or at least reduce the images appearing as if they are sheared when there is a moving object in the boundary regions of adjacent unit images.

It is also desirable to provide an image pickup apparatus and an image pickup method that can realize a commercially available ordinary digital camera that is equipped with a functional feature of being capable of obtaining a high quality panoramic whole image at low cost.

Embodiments of the invention seek to achieve the above objects by picking up unit images, each constituting a part of the scenic range to be imaged, by sequentially shifting the image pickup direction, cutting out image regions of a predetermined size, each constituting a part of each of the picked up unit images, so as to produce overlapping areas and sequentially and partly superposing the cut out image regions to generate a whole image of the whole scenic range.

Various respective aspects of the present invention are set out in the appended claims

Thus, according to embodiments of the invention, a whole image of a whole scenic range is generated by picking up unit images, each constituting a part of the scenic range to be imaged, by sequentially shifting the image pickup direction, cutting out image regions of a predetermined size, each constituting a part of each of the picked up unit images, so as to produce overlapping areas.

With this arrangement, it is possible to uniformize the noise components of the image regions to improve the image quality of the panoramic whole image. Additionally, it is possible to pick up a panoramic image where discontinuous parts are hardly produced in the boundary regions of adjacent unit images and avoid or at least reduce the images appearing as if they are sheared when there is a moving object in the boundary regions of adjacent unit images.

Additionally, an anisotropic filtering process may be conducted on an image of a cut out image region or a generated whole image to make the blur, if any, less noticeable.

The invention will now be described by way of example with reference to the accompanying drawings, throughout which like parts are referred to by like references, and in which:

FIG. 1 is a schematic block diagram of an image pickup apparatus for picking up a panoramic image according to a first embodiment of the invention;

FIG. 2 is a schematic illustration of an instance of synthesizing a panoramic whole image by superposing picked up strip-shaped images and bonding them together;

FIG. 3 is a schematic illustration of techniques for cutting out strip-shaped image regions;

FIG. 4 is a schematic illustration of the time necessary for the technique A to read out pixel values and the corresponding time for the technique B;

FIG. 5 is a schematic illustration of cutting out strip-shaped image regions so as to produce overlapping areas by means of the technique B;

FIG. 6 is a flow chart of the operation of picking up images by an image pickup apparatus according to an embodiment of the invention, using the technique B;

FIG. 7 is a flow chart of the operation of computing various imaging parameters;

FIG. 8 is a detailed flow chart of the operation of obtaining a panoramic image;

FIG. 9 is a detailed flow chart of the operation of the matching process;

FIG. 10 is a schematic illustration of a method of uniformizing noises in a direction perpendicular to the direction of displacement;

FIG. 11 is a schematic illustration of normalization of a canvas image;

FIG. 12 is a schematic illustration of a filtering process for a normalized image;

FIG. 13 is a schematic illustration of a method of displaying a synthesized image in the monitor section;

FIG. 14 is a schematic illustration of an image pickup process, using the technique A and the technique B in combination;

FIG. 15 is a schematic illustration of the appearance of an image pickup apparatus according to the second embodiment of the invention that is adapted to obtain a panoramic image and has a first cabinet and a second cabinet;

FIGS. 16A and 16B are schematic block diagrams of the second embodiment of image pickup apparatus;

FIG. 17 is a schematic illustration of the method of controlling the rotary motion of the first cabinet by means of a photo-interrupter;

FIGS. 18A through 18C are schematic illustrations of the second embodiment, showing how the first cabinet is driven to rotate by depressing the shutter button;

FIG. 19 is a flowchart showing the image pickup step of the second embodiment;

FIG. 20 is a schematic illustration of the operation of synthesizing a panoramic whole image by bonding images that are picked up successively;

FIG. 21 is a schematic illustration of the unit images of the cut out image regions obtained as a result of shooting the object of shooting by means of the image pickup apparatus, while panning the image pickup apparatus horizontally;

FIG. 22 is a schematic illustration of an operation synthesizing a panoramic image by bonding the unit images of FIG. 21;

FIG. 23 is a schematic illustration of an image before a filtering process;

FIG. 24 is a schematic illustration of a filter that can be used for the second embodiment;

FIG. 25 is a schematic illustration of the image of FIG. 23 after a filtering process; and

FIG. 26 is a flow chart of the operation of picking up images and synthesizing a panoramic image of the second embodiment.

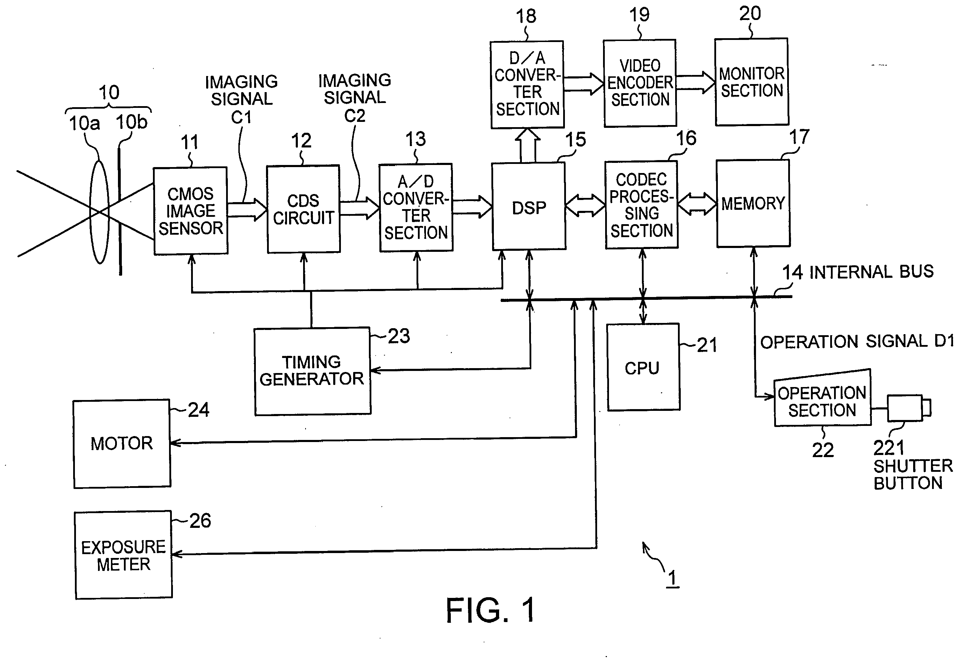

FIG. 1 is a schematic block diagram of an embodiment of image pickup apparatus according to an embodiment of the invention. Referring to FIG. 1, the image pickup apparatus 1 comprises an image pickup section 10 for picking up an image of an object of shooting. The image pickup section 10 includes a lens 10a for focusing rays of light coming from the object to form an image of the object; a diaphragm drive section 10b for regulating the aperture of the lens by means of a shutter blade (not shown) for blocking the rays of light coming in from the object by way of the lens 10a and a CMOS (complementary metal-oxide semiconductor) image sensor 11 for generating an electric imaging signal C1 according to the input image of the object.

The image pickup apparatus 1 also comprises a CDS (correlated double sampling) circuit 12 for compensating disparities of the imaging signals C1 generated by the CMOS image sensor 11, an A/D converter section 13 for performing an operation of analog/digital conversion on the imaging signal C2 supplied from the CDS circuit 12, a digital signal processor (DSP) 15 for temporarily storing the digitized imaging signal C2 supplied from the A/D converter section 13 as image data, a codec processing section 16 for encoding the image data from the connected DSP 15 and a memory 17 for storing the image data supplied from the codec processing section 16.

The image pickup apparatus 1 further comprises a D/A converter section 18 for performing an operation of digital/analog conversion on the image data supplied form the DSP 15, a video encoder section 19 for converting the image data from the D/A converter section 18 into a video signal and a monitor section 20 connected to the video encoder section 19 and adapted to display an image to the user according to the above described video signal. The image pickup apparatus 1 additionally comprises a CPU (central processing unit) 21 for controlling all the image pickup apparatus 1 by way of an internal bus 14 connected to it, an operation section 22 connected to the internal bus 14 so as to be used by the user for various operations, a timing generator 23 for controlling the signal processing system from the CMOS image sensor 11 to the DSP 15 according to the control signal transmitted to it from the CPU 21 by way of the internal bus 14 and a motor 24 connected to the internal bus 14 as well as an exposure meter 26 also connected to the internal bus 14.

The image pickup section 10 performs an automatic aperture control operation and an automatic focal point control operation according to the operation signal supplied from the CPU 21. The image pickup section 10 also regulates the image pickup direction of the image pickup apparatus in both horizontally and vertically according to the operation signal and the aperture of the diaphragm by opening or closing the shutter blade (not shown) according to the aperture value input to it by way of the operation section 22.

The CMOS image sensor 11 generates an imaging signal C1 by converting the image of the object of shooting coming in by way of the lens section 10a and the diaphragm drive section 10b into an electric signal and outputs the electric signal to the CDS circuit 12. The CMOS image sensor 11 is adapted to select a partial region of the image of the object formed on the imaging plane thereof and efficiently read out the pixel values of the region.

The CDS circuit 12 removes the noises in the imaging signal C1 supplied from the CMOS image sensor 11 by means of a correlated double sampling circuit or conducts a processing operation for amplifying the gain of the signal and outputs the obtained signal to the A/D converter section 13 as imaging signal C2. The A/D converter section 13 performs an operation of analog/digital conversion on the imaging signal C2 supplied from the CDS circuit 12 and outputs the obtained digital signal to the DSP 15. The timing of each operation of the CDS circuit 12 and that of the A/D converter section 13 are controlled by the timing generator 23 so that images may be continuously taken in at a constant frame rate.

The DSP 15 is a block including a signal processing processor (not shown) and an image storing RAM (not shown). The image represented by the imaging signal C2 from the AID converter section 13 is supplied as stream data arranged at a constant frame rate and temporarily stored in the image storing RAM under the control of the timing generator 23. The signal processing processor is arranged to perform a pre-programmed image processing operation on the image stored in the image storing RAM. The image stored in the image storing RAM and processed is then transmitted to the codec processing section 16 and/or the D/A converter section 18.

The codec processing section 16 compresses the data volume of the image transmitted from the DSP 15 by means of a predetermined method. It may be adapted to compression coding of the data volume according to a given standard such as the related JPEG (Joint Photographic Experts Group) Standard.

The memory 17 is typically formed by a semiconductor memory, a magnetic recording medium or a magneto-optical recording medium. It is a medium for recording the image data compressed by the codec processing section 16 at a predetermined address. The user can transfer the picked up image to some other apparatus such as a PC and enjoy it or perform any of various retrieving operations if the memory 17 is realized by a recording medium that can be removably fitted to the image pickup apparatus.

The monitor section 20 displays the image converted into an analog signal by the D/A converter section 18 and then into a video signal by the video encoder section 19. The monitor section 20 may be realized by a liquid crystal display element arranged on a lateral surface of the cabinet of the image pickup apparatus 1 so that the user may confirm what is picked up on a real time basis, while executing an image pickup process him- or herself.

The CPU 21 is connected to a ROM that stores control programs to be executed and a DRAM that is used as working area for storing and developing data by way of the internal bus 14 and takes the role of central processing unit for controlling the entire image pickup apparatus 1. The CPU 21 generates an activation signal according to the operation signal D1 supplied from the operation section 22 and the information relating to the lightness of the object of shooting transmitted from the exposure meter 26 and transmits it to the image pickup section 10 by way of the internal bus 14.

The operation section 22 includes keys that are to be operated by the user to freely regulate the view angle and the image pickup direction and also freely regulate the aperture and the exposure time of the image pickup section 10. The operation section 22 generates an operation signal D1 according to the information input by the user and transmits it to the CPU 21 by way of the internal bus 14. The operation section 22 also includes a shutter button 221 that generates an operation signal D1 for starting or ending an image pickup operation when the shutter button 221 is depressed by the user and transmits it to the CPU 21 by way of the internal bus 14.

The motor 24 is typically a stepping motor that is provided as drive source for driving the image pickup section 10 to slew. The motor 24 rotates according to the activation signal from the CPU 21. Thus, the image pickup section 10 can change the image pickup direction horizontally or vertically.

The exposure meter 26 is a sensor that identifies the lightness of the object to be shot by the image pickup section 10 and transmits information on the identified lightness to the CPU 21.

The image of the object of shooting that is shot by the image pickup apparatus 1 having the above described configuration is then converted into an electric signal, or imaging signal C1, by the CMOS image sensor 11 and the noises in the imaging signal C1 is removed by the CDS circuit 12 to become imaging signal C2. The imaging signal C2 then undergoes an analog/digital conversion process in the A/D converter section 13. The imaging signal C2 representing an image is stored in the image storing RAM (not shown) of the DSP 15 and subjected to a predetermined image processing operation. Subsequently, it undergoes a digital/analog conversion process in the D/A converter section 18 and the image represented by the imaging signal C2 is displayed in the monitor section 20 or encoded by the codec processing section 16 so as to be recorded in the memory 17.

Now, the image pickup method of the embodiment of image pickup apparatus 1 will be described below.

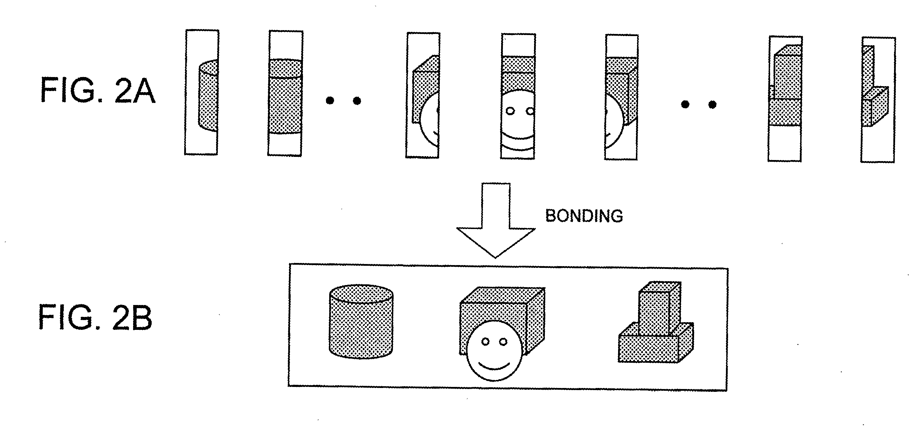

The image pickup apparatus 1 is adapted to pick up a large number of strip-shaped images as shown in FIGS. 2A in at short shooting time intervals by sequentially shifting the image pickup direction horizontally. Then, a panoramic whole image of the whole scenic range, or the object of shooting, as shown in FIG. 2B is synthetically formed by bonding the strip-shaped images, partly superposing each other. Thus, it is possible to alleviate any discontinuity of images that can be produced as a result of parallax and possible distortion of the lens by bonding narrow strip-shaped images together. Additionally, it is also possible to alleviate any discontinuity of images that can be produced as a result of a moving object by picking up narrow strip-shaped images within a short period of time.

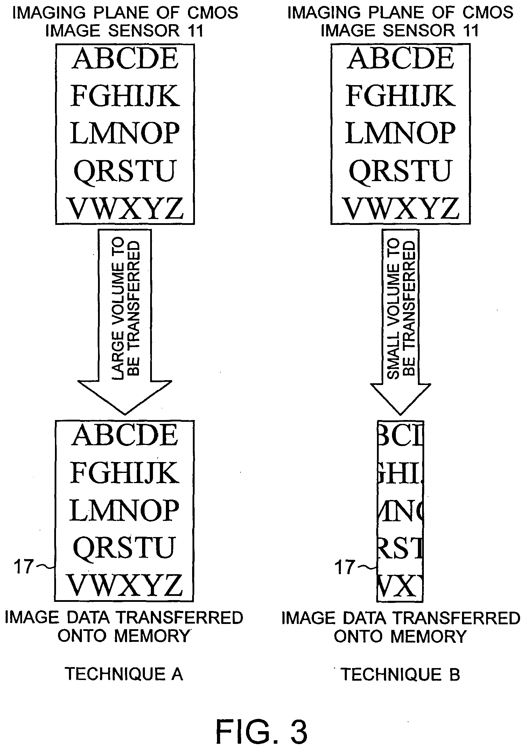

FIG. 3 schematically illustrates a method of cutting out strip-shaped image regions. The rays of light coming in from the object of shooting enter the image pickup apparatus 1 by way of the lens section 10a and the diaphragm drive section 10b are focused on the image plane of the CMOS image sensor 11 to form an image of the object there. Note that the image pickup apparatus 1 is adapted to use both technique A of reading out the pixel values of all the region of the formed image of the object and transferring them to the DSP 15 as shown in FIG. 3A and technique B of selecting a strip-shaped region as part of the formed image and efficiently reading out the pixel values of the selected region and transferring them to the DSP 15 as shown in FIG. 3B. In the technique B, an image region covers a relatively small area from which the pixel values are read out and hence the amount of image data to be transferred can be relatively small if compared with the technique A.

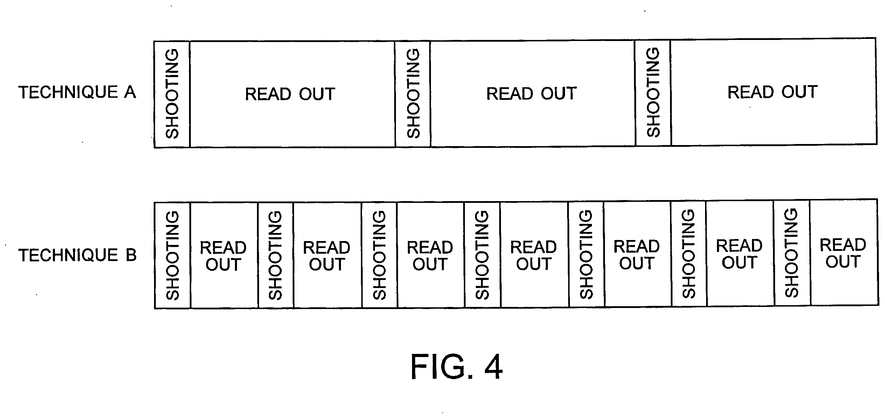

FIG. 4 illustrates the relationship between the shooting time and the time required to read out the pixel values of each of the techniques A and B. More specifically, since the time that has to be spent to read out the pixel values can be reduced when the amount of image data to be transferred is small, it is possible to increase the number of times of shooting operation that can be carried out per unit time. In other words, when shooting a moving object, the technique B that involves short shooting time intervals can be effectively employed to reduce any discontinuity in the picked up image. It will be appreciated that the scenic range to be shot, or the total area to be shot, is same for both the technique A and the technique B. In other words, the size of the total image data, or the total amount of image data to be transferred, is small for both the technique A and the technique B.

However, the technique B can reduce the amount of image data to be transferred at a time if compared with the technique A. Thus, it is possible for the technique B to start picking up a unit image when the corresponding image region is cut out so that it is possible to use short shooting time intervals. As a result, it is possible to minimize the positional displacement of the moving object along the seam of adjacent strip-shaped images that can take place due to the time lag between the shooting time of one of the two images and that of the other image. Additionally, since the total area to be shot and hence the total amount of image data to be transferred is same for both the technique A and the technique B, the cost of the entire hardware including the image pickup apparatus 1 does not vary between the two techniques.

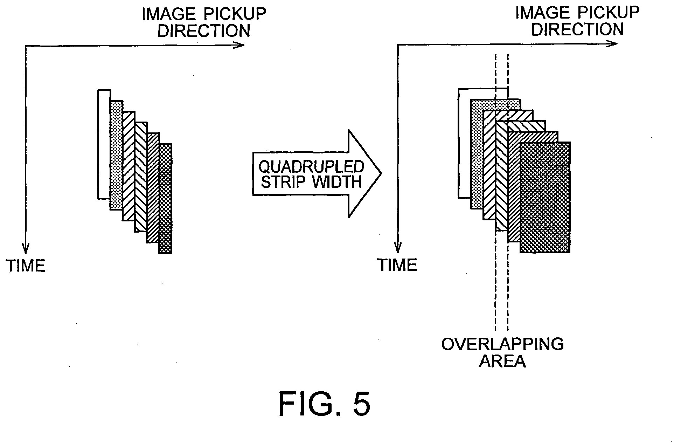

According to an embodiment of the invention, strip-shaped image regions are cut out so as to produce overlapping areas as shown in FIG. 5. If the width of each strip-shaped image region is four times as wide as the proper width of the region to produce overlapping areas, a total of four strip-shaped image regions are laid one on the other in each overlapping area as shown in FIG. 5. Then, the number L of image regions that are partly superposed one on the other is four. Subsequently, a panoramic whole image of the object of shooting that is a wide scenic range is formed by sequentially and partly superposing the image regions having overlapping areas. While the sensitivity of the image pickup apparatus 1 is inevitably reduced as the shutter speed is raised, the noise components of the image regions can be uniformized by sequentially and partly superposing the image regions having overlapping areas. For example, when four image regions picked up with a sensitivity of 1/4 of the normal sensitivity are sequentially and partly superposed, the obtained image will be equivalent to an image picked up with the normal sensitivity. Thus, it is possible to produce a high quality whole image with unnoticeable noise components.

As described above, the image pickup apparatus 1 according to an embodiment of the invention is adapted to cut out image regions of a predetermined size to produce overlapping areas and sequentially and partly superpose the cut out image regions. The overlapping areas produced to superpose the image regions operate to improve the image quality. Thus, if the picked up images are dark and contains noises to a large extent as a result of using a high shutter speed, it is possible to generate a high quality whole image by producing overlapping areas.

For the purpose of embodiments of the present invention, the number L of strip-shaped images that are superposed may be required to be not smaller than two for each overlapping area as average (preferably, not smaller than two images may be partly superposed). Then, as not smaller than two images are partly superposed, noises are reduced in all the unit images of the ultimately generated whole image to improve the image quality.

Now, the procedure of picking up an image followed by the embodiment of image pickup apparatus 1, using the technique B will be described below.

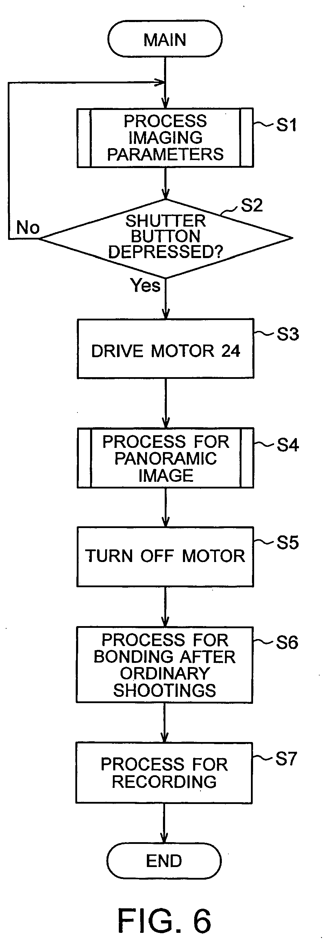

As shown in FIG. 6, with this technique B, firstly various imaging parameters for picking up an image by the embodiment are computed in Step S1. More specifically, information on the lightness as identified by the exposure meter 26 is acquired and the imaging parameters including the aperture value and the shutter speed are computed in Step S1.

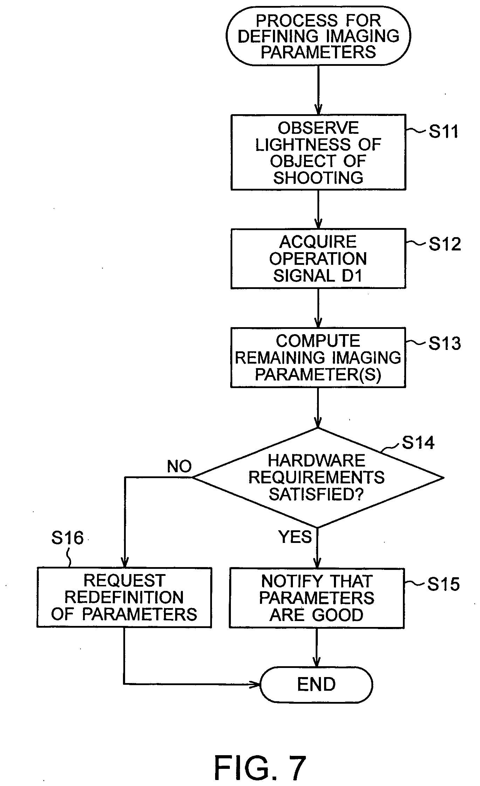

FIG. 7 is a flow chart illustrating the procedure of the operation of Step S1 in greater detail. When the imaging parameters are computed in Step S1, firstly the lightness I of the object of shooting is observed by means of the exposure meter 26 in Step S11. The information on the lightness I is transmitted to the CPU 21.

Then, in Step S12, the CPU 21 receives the operation signal D1 transmitted from the operation section 22. The operation signal D1 includes the aperture value A, the exposure time S, the number L of images to be superposed and the angular velocity M of revolution of the motor 24 that are input by the user by way of the operation section 22. It may be so arranged in the image pickup apparatus 1 that the user specifies the imaging parameter values according to his or her aim of imaging or the CPU 21 determines some of the imaging parameter values as variables.

If there is at least an imaging parameter that is not specified by the user in Step S12, it is determined by computation in Step S13. The mutual relationship of the imaging parameters may be defined by means of mathematical formulas so that, if there is at least an imaging parameter that is not specified by the user in Step S12, it can be computationally determined in Step S13.

The relationship between the angular velocity M of revolution of the motor 24 and the exposure time S can be expressed by formula (1) below.

$$M \propto 1/S \qquad \ldots(1)$$

Thus, the image pickup direction can be shifted at an angular velocity that monotonously decreases as a function of the exposure time S or is inversely proportional to the exposure time S on the basis of the formula (1).

The relationship of the exposure time S, the aperture value A, the number L of images to be superposed can be expressed by formula (2) below relative to the lightness I as observed by the above described exposure meter 26.

$$I \propto 1/S \cdot 1/A2 \cdot 1/L \qquad \ldots (2)$$

The relationship between the strip-shaped image region W and the number L of images to be superposed can be expressed by formula (3) below.

$$W \propto L \qquad \ldots (3)$$

The constant of proportionality of each of the proportional relationships (1), (2) and (3) is determined according to the characteristics of the hardware.

When there are not smaller than two variables in one or more than one of the proportional relationships (1), (2) and (3), the imaging parameter that is not specified by the user may not be able to be computationally determined. In such a case, the variables may be optimized so as to best reflect the predefined user's aim of imaging.

The above imaging parameters are determined below as examples for Step S13. Note that k1, k2 and k3 in the following formulas are constants of proportionalities that match the characteristics of the hardware.

For instance, if the angular velocity M of revolution of the motor and the aperture value A are given by the user, firstly the exposure time S is determined by means of formula (4) below.

$$S = k1/M \qquad \dots (4)$$

Then, the number L of images to be superposed is determined by means of formula (5) below.

$$L = k2/S/A2/I \qquad \dots (5)$$

Then, the width W of the strip-shaped images is determined by means of formula (6) below.

$$W = k3L \qquad \dots (6)$$

Then, in Step S14, it is checked if the parameter or each of the parameters determined in Step S13 matches the capacity of the image pickup element and satisfies the restrictive requirements of the hardware including the image pickup apparatus 1 or not. If it is found that the parameter or each of the parameters satisfies the requirements of the hardware, the operation proceeds to Step S15. On the other hand, if it is found that the parameter or each of the parameters does not satisfy the requirements of the hardware, the operation proceeds to Step S16.

When the operation proceeds to Step S15, the CPU 21 notifies the user of that the imaging parameter values specified by the user are good. When, on the other hand, the operation proceeds to Step S16, the CPU 21 notifies the user of that the imaging parameter values specified by the user are not good and request the user to use different values for the aperture value A and the angular velocity M. The imaging parameters will be optimized as the user specifies the imaging parameters once again, selecting different values.

After executing the Step S1 that is illustrated in detail in FIG. 7, the operation proceeds to Step S2 shown in FIG. 6, where it is determined if operation signal D1 is generated as a result of depressing the shutter button 221 of the operation section 22 or not. The operation proceeds to Step S3 when it is determined that operation signal D1 is generated. On the other hand, the operation returns to Step S1 and repeats the above described steps when it is not determined that operation signal D1 is generated.

When the operation proceeds to Step S3, the motor 24 is driven to slew the image pickup section 10. The value determined in Step S1 is used for the angular velocity M of revolution of the motor. The image pickup direction of the image pickup section 10 is shifted horizontally as an example in the following description of the procedure.

The operation proceeds to Step S4 and executes a panoramic image pickup process.

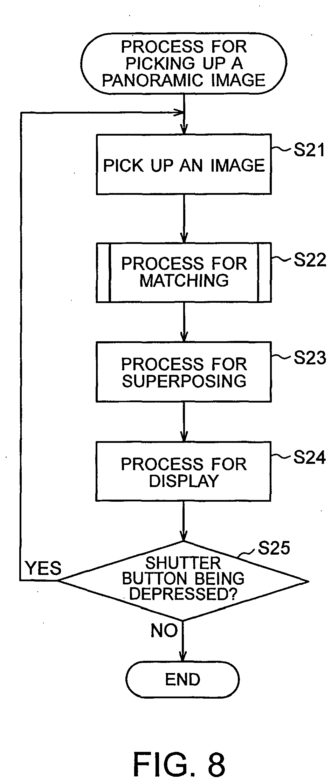

FIG. 8 illustrates the procedure to be followed for a panoramic image pickup process in Step S4. Referring to FIG. 8, the image pickup section 10 performs an image pickup operation in Step S21. The imaging parameters determined in Step S1 are used for the image pickup operation. The imaging parameters may be updated by executing the process of Step S1 each time the image pickup section 10 performs an image pickup operation. The image of the object of shooting picked up in Step S21 is converted into an electric signal by the CMOS image sensor 11 and a strip-shaped image region is selected as part of the image. Then, the pixel values of the image region are read out to produce imaging signal C1. The imaging signal C1 is converted into an imaging signal C2 in a manner as described above and stored in the image storing RAM (not shown) of the DSP 15. Subsequently, the operation proceeds to Step S22.

In Step S22, a matching process is executed to compute the relative displacement between the newly acquired image region and the image region that is acquired last.

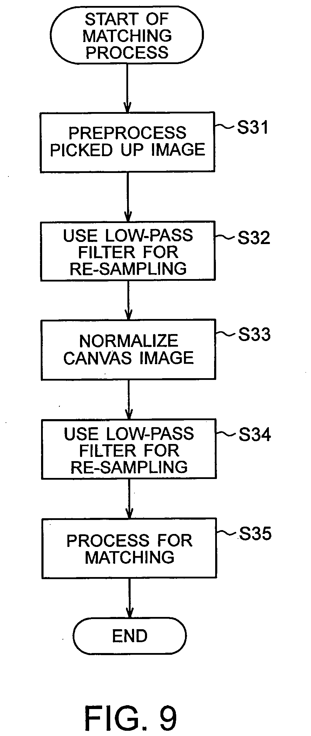

FIG. 9 is a flow chart illustrating the sequence of the matching process in Step S22.

Referring to FIG. 9, the DSP 15 firstly executes a preprocess including a black level compensation process and a gamma correction process on the newly acquired image region in Step S31 under the control of the CPU 21.

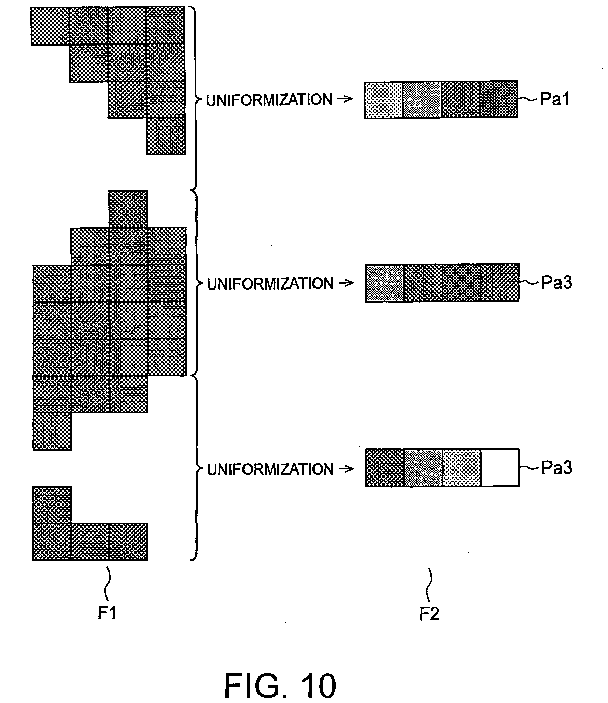

Then, in Step S32, the obtained result is re-sampled for the acquired image region by applying a low-pass filter. If the angular velocity of the motor is high, a corresponding fast shutter speed is required. Then, the image pickup operation is conducted with an exposure time shorter than the ordinary exposure time so that the acquired image will be dark as a whole and contain noises to a large extent. Therefore, the noises are reduced in Step S32 before the execution of the matching process. Since the level of precision of horizontal displacement is important for this example, the filter is used to uniformize noises in a direction perpendicular to the direction of displacement. More specifically, noises are uniformized in a vertical direction that is perpendicular to the horizontal direction of the image. For the filtering process, each time a new image region is acquired as indicated by F1 in FIG. 10, the image region F1 is divided to produce a plurality of rows and each row is subjected to uniformization. In the instance of FIG. 10, one-dimensional image strings Pa1, Pa2, Pa3 as indicated by F2 are obtained when five pixels that are arranged in the row direction are subjected to uniformization as groups. The image rows are used in the subsequent matching process.

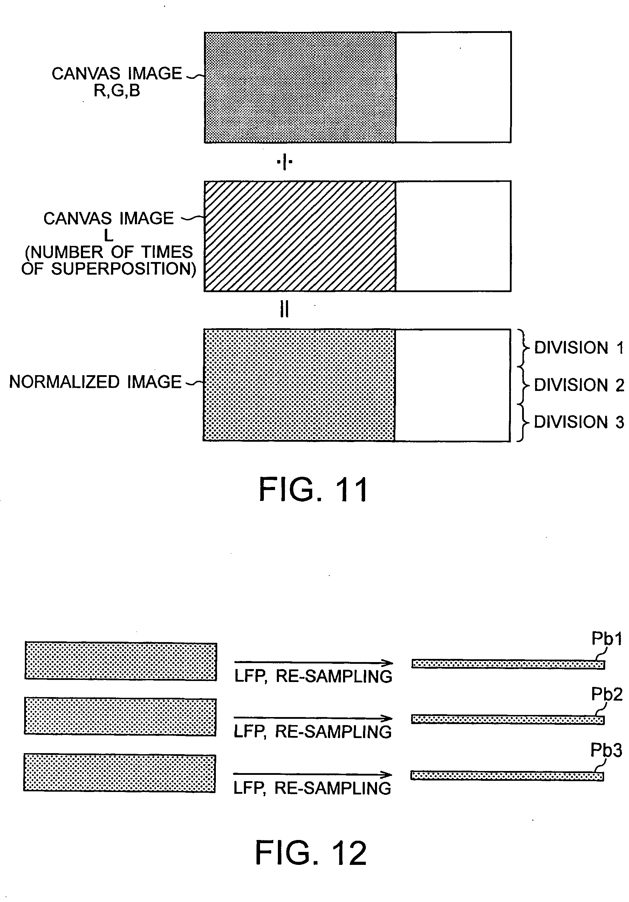

Then, in Step S33, the image regions acquired by shooting before the above described image region F1 are normalized. The picked up image regions are sequentially superposed and stored in a relatively large storage area for storing a large number of pixels. The image regions generated by superposing the image regions in the storage area is referred to as canvas image hereinafter. Each of the pixels of the canvas image is defined by four factors including the three primary colors of R, G, B that are used for ordinary images and the number L of superposed images. As a new image is picked up, the number L of superposed images is incremented by one. The computations of FIG. 11 (R/L, G/L, B/L) are carried out for the normalization process of Step S33 to acquire an image constituted by the ordinary three primary colors of R, G, B. In this way, each of the pixels of the entire image to be generated is constituted by a denominator data and a numerator data, where the numerator data is the sum of the pixel values of each of the pixels of the overlapping image area and the denominator data is the number of superposed images at the corresponding pixel. Then, the pixel values of the image regions are uniformized to produce a whole image that contains only few noises.

Then, the operation proceeds to Step S34, where the filtering process and the re-sampling process of Step S32 are applied to the images normalized in Step S33. The normalized images are divided into groups of different numbers of pixels as a function of the filtering process of Step S32 as shown in FIG. 12 and subjected to a filtering process for uniformizing noises in a vertical direction that is perpendicular to the direction of displacement. Then, one-dimensional image strings Pb1, Pb2, Pb3 are generated. Note that the image strings Pb1, Pb2, Pb3 corresponds respectively to the above described image strings Pa1, Pa2, Pa3.

Then, the operation proceeds to Step S35, where the image strings Pa1, Pa2, Pa3 acquired in Step S32 and the image strings Pb1, Pb2, Pb3 acquired in Step S34 are subjected to pattern matching to determine the relative positional displacement of each of the image strings. Since a filtering process is executed in Step S32 or Step S34 on each of the image strings that are subjected to pattern matching, the pattern matching process can be executed highly accurately without being influenced by noises. In the pattern matching process, for example, the image string Pa1 and the corresponding image string Pb1 are displaced relative to each other to determine the correlation value and the positions of the two image strings that maximize the correlation value are identified as positions that are correlated to the largest extent (to be referred to as the most correlated positions hereinafter). The pattern matching process is executed for all the image strings.

After completing the pattern matching processes in Step S35, the operation proceeds to Step S23 in FIG. 8 for a superposing process. In the superposing process, a correction process is executed to align the above described newly picked up image region F1 to the corresponding most correlated position that is identified in Step S22. Each of the pixels of the image region F1 is added to the existing corresponding pixel on the canvas image. The number L of images superposed on the canvas image is then incremented by one for each of the pixels when the adding process is executed. As a result, it is possible to computationally determine the pixel value of each of the pixels constituting the panoramic whole image on the basis of the sum of the pixel values of the plurality of image regions so that a whole image showing a good S/N ratio can be obtained with a reduced level of random noises. Thus, it is possible to produce a high quality whole image that is very appealing to the eye.

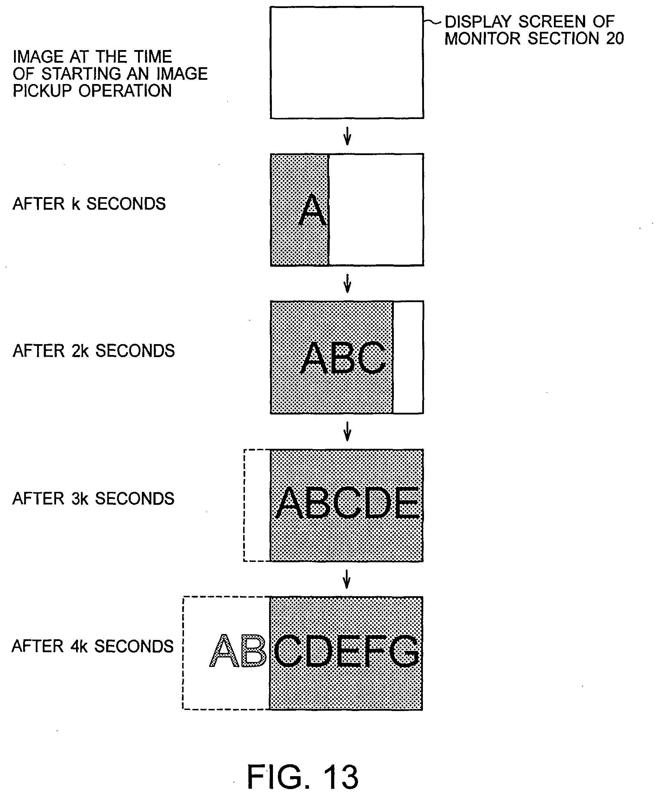

Then, the operation proceeds to Step S24, where the generated canvas image is displayed in the monitor section 20 as whole image. More specifically, in Step S24, the image regions necessary for displaying the canvas image are normalized as in Step S33 and then actually displayed on the monitor section 20. FIG. 13 schematically illustrates how a canvas image is typically displayed on the display screen of the monitor section 20. At the time of starting an image pickup operation, no image is displayed at all on the display screen of the monitor section 20. When k seconds have elapsed since the start of the image pickup operation, the generated canvas image is displayed on the display screen from the left end thereof. When 2k seconds have elapsed, the canvas image updated by adding new image regions is displayed on the display screen from the left end thereof. When 3k seconds have elapsed, the canvas image updated by further adding new image regions is displayed on the display screen from the left end. Since whole image, or the canvas image or the whole image that is updated at the end of the 3k seconds, overflows from the display screen, the whole image is scrolled to display the newly superposed image regions with priority. When 4k seconds have elapsed, the whole image similarly overflows from the display screen so that the whole image is scrolled to display the newly superposed image regions with priority.

In this way, the image regions newly generated by subsequent shootings are displayed with priority so that the user can visually check the image regions on the display screen of the monitor section 20 on a real time basis even if the shooting operation is continuing.

After the end of the display process in Step S24, the operation proceeds to Step S25, where it is determined if the shutter button 221 of the operation section 22 is still being depressed or not by means of the operation signal D1. If it is determined in Step S25 that the shutter button 221 is still being depressed as a result, the operation returns to Step S21 and repeats the above steps for the operation shooting the object. If, on the other hand, it is determined in Step S25 that the shutter button 221 is not being depressed any longer, the process of Step S4 in FIG. 6 is terminated and the operation proceeds to Step S5 in FIG. 6.

In Step S5, the slewing motion of the image pickup section 10 is stopped by halting the operation of driving the motor 24.

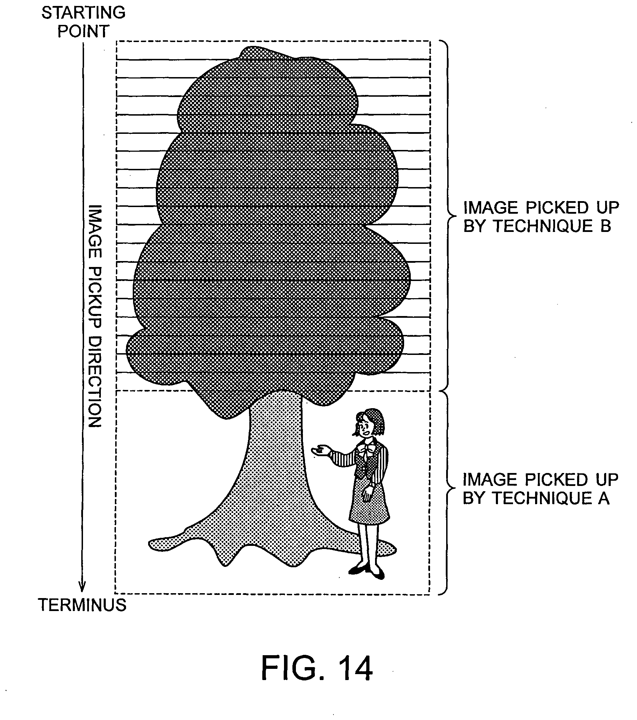

If the data of all the regions of the object of shooting, whose images are formed on the imaging plane of the CMOS image sensor 11, are read out in Step S6 by using the technique A, a process of bonding the images of the regions, that are generated in the above described manner, to the canvas image is executed. While Step S6 may not necessarily be indispensable, it can suitably be used when picking up an image of an object as shown in FIG. 14. FIG. 14 illustrates an instance of shooting a scene where a person is standing under a big tree. The technique B is suitably used for shooting an upper part of the scene where the leaves of the tree are swinging due to wind, while the technique A, or the ordinary imaging technique, is suitably used for shooting the remaining lower part of the scene where the person is standing still.

Then, finally, the operation proceeds to Step S7, where the acquired image data are encoded by the codec processing section 16 and the encoded image data are written into the memory 17 to terminate the operation.

Thus, this embodiment of image pickup apparatus 1 can improve the image quality by producing overlapping areas in the cut out image regions at reduced cost in terms of the entire system because it does not require any hardware arrangement for accurately repeating a cycle of operation of slewing the camera and stopping the slewing motion.

While the image pickup section 10 of the embodiment of image pickup apparatus 1 is driven to slew horizontally in the above description, the present invention is by no means limited thereto. The image pickup section 10 may be driven to slew vertically in a similar manner without any problem.

In the above-described embodiment, each time an image is picked up for an image region by the image pickup section 10, it may be partly superposed on the existing image regions. Additionally, the used image may be discarded after the superposing operation. Then, the memory capacity necessary for the process can be reduced to further reduce the cost of the hardware. Then, it is possible to realize a system highly suitable for real time processing operations.

Another image pickup apparatus 3 according to an embodiment of the invention will be described below. However, the components of the image pickup apparatus 3 that are similar to those of the above described embodiment of image pickup apparatus 1 are omitted from the following description because the description given above by referring to FIG. 1 is applicable to this embodiment.

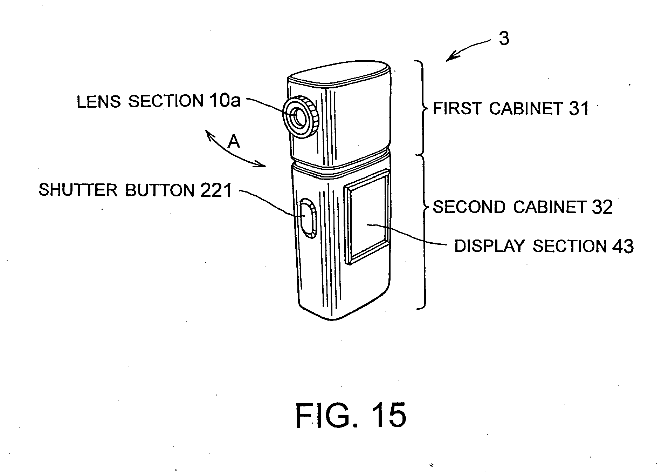

Referring now to FIG. 15, the image pickup apparatus 3 of this embodiment comprises a first cabinet 31 that can be rotated in the direction of arrow A around a rotary shaft linked to it to shoot an object by way of an image pickup section 10 that includes a lens section 10a and a second cabinet 32 arranged under the first cabinet 31 and adapted to be held by the user by one hand. The second cabinet 32 is provided with a shutter button 221 and a display section 43 for displaying the image picked up by the user so that the user may check the picked up image.

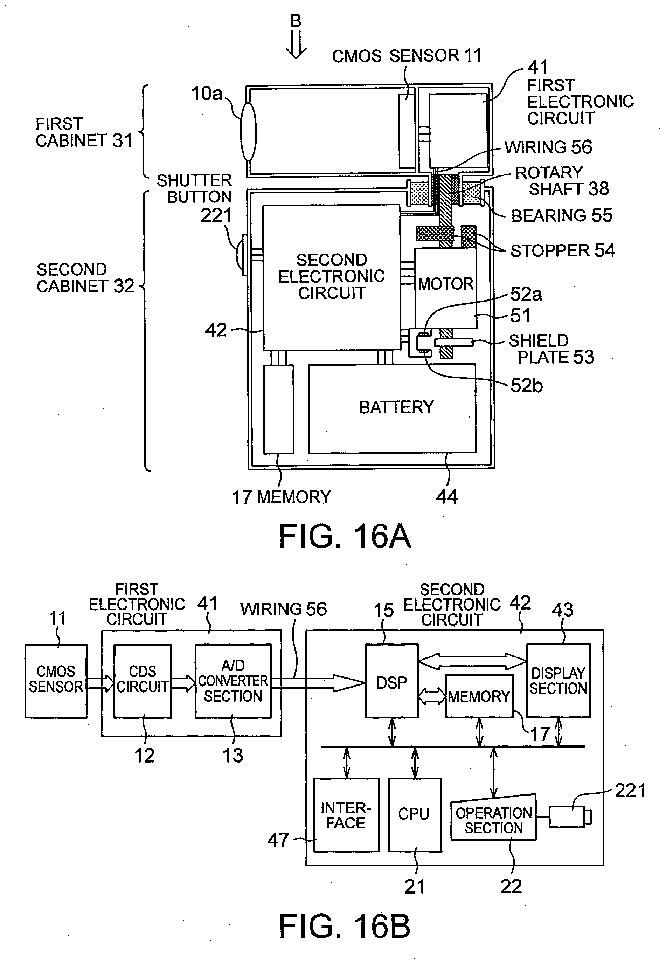

FIGS. 16A and 16B are schematic block diagrams of the image pickup apparatus 3, showing the internal configuration thereof. The first cabinet 31 includes a lens section 10a, a CMOS image sensor 11 and a first electronic circuit 41 including at least a CDS circuit 12 and an A/D converter section 13.

The second cabinet 32 is linked to the first cabinet 31 by way of the rotary shaft 38 and includes a motor 51 for driving the rotary shaft 38 to rotate, a photo interrupter 52, a shield plate 53, the photo interrupter 52 and the shield plate 53 being adapted to be used for controlling the rotary angle of the rotary shaft 38, a stopper 54 for physically limiting the rotary motion of the rotary shaft 38, a bearing 55 held in a link hole formed on the top surface of the second cabinet 32 and adapted to realize a smooth rotary motion of the rotary shaft 38 borne by it, a second electronic circuit 42 for controlling the components of the image pickup apparatus 3 and a battery 44 for driving the components of the image pickup apparatus 3.

As shown in FIG. 16B, the second electronic circuit 42 includes a DSP 15, a memory 17, a CPU 21, an operation section 22, a shutter button 221, a display section 43 and an interface 47 for exchanging image data with the motor, the photo interrupter and external devices and is connected to the first electronic circuit 41 by way of wires 56 to be used for exchanging electric signals with the first electronic circuit 41.

In addition to the above listed components, the second cabinet 32 also includes a button for selecting an ordinary image mode and a panoramic image mode and other various buttons that ordinary digital cameras have.

The motor 51 is typically realized by a stepping motor adapted to drive the rotary shaft 38 to rotate at an angular velocity corresponding to the drive pulse supplied to it. The rotary shaft 38 that is driven to rotate by the motor 51 is linked at an end thereof to the first cabinet 31 and the stopper 54 is rigidly fitted to it at a middle part thereof. The shield plate 53 is rigidly fitted to the other end of the rotary shaft 38. Thus, the first cabinet 31 is driven to rotate by the motor 51 along with the shield plate 53 and the stopper 54 due to the rotary motion of the rotary shaft 38. The relative displacement of the rotary shaft 38 produced by the motor 51 can be detected by the number of pulses applied to the motor 51.

The display section 43 includes arrangements similar to those of the D/A converter section 18, the video encoder 19 and the monitor section 20 and is adapted to display the generated image by way of the liquid crystal display element arranged at a lateral surface of the second cabinet 32. Since the display section 43 is separated from the first cabinet 31 that is driven to rotate by the rotary shaft 38, it is not affected by the rotary motion of the rotary shaft 38 and hence provides a good visibility to the user.

The photo interrupter 52 includes a light emitting body 52a and a light receiving body 52b arranged below the light emitting body. While the light receiving body 52b keeps on receiving the optical signal coming from the light emitting body 52a, the optical signal is hidden by the shield plate 53 when the shield plate 53 is turned to come close to the photo interrupter 52 by the rotary motion of the rotary shaft 38. Thus, the rotary position of the rotary shaft 38 can be identified on the basis of the hidden state of the optical signal received by the light receiving body 52b.

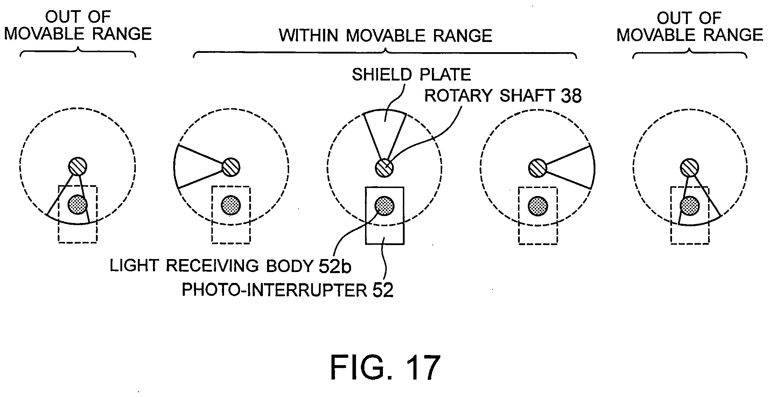

It may be so arranged that, when the rotary shaft 38 is driven to rotate beyond the movable range and the optical signal is blocked by the shield plate 53, the motor 51 is stopped in response to the obstruction. FIG. 17 illustrates the photo-interrupter 52 and the shield plate 53 as viewed in the direction of B in FIG. 16. As seen from FIG. 17, the motor 51 is not stopped and hence it is possible to freely rotate the rotary shaft 38 in the movable range because the optical signal to be received by the light receiving body 52b is not blocked by the shield plate 53 in the movable range. On the other hand, the optical signal to be received by the light receiving body 52b is blocked by the shield plate 53 and hence the motor 51 is stopped when the rotary shaft 38 is driven to rotate beyond the movable range. It may additionally be so arranged that the rotary motion of the first cabinet 31 is physically suppressed by means of a stopper 54 when the rotary shaft 38 is driven to rotate beyond the movable range.

As a result of introducing an arrangement for limiting the rotary range of the first cabinet 31 relative to the second cabinet 32, it is possible to transmit data from the first cabinet 31 to the second cabinet 32 by means of flexible wires that are popularly being used for ordinary movable objects without using a photo-coupler and related special joint members.

The user can shoot an object of shooting by means of the image pickup apparatus 3 according to an embodiment of the invention and having the above described configuration, holding the second cabinet 32 by one hand. The user can specify the timing of starting a shooting operation and that of ending the shooting operation by depressing the shutter button 221 arranged outside the second cabinet 32. Since the shutter button 221 is located at a position that the user can touch it easily by a finger tip of the hand holding the second cabinet 32, the user can give a command for starting a shooting operation and a command for ending a shooting operation only by slightly moving the finger tip.

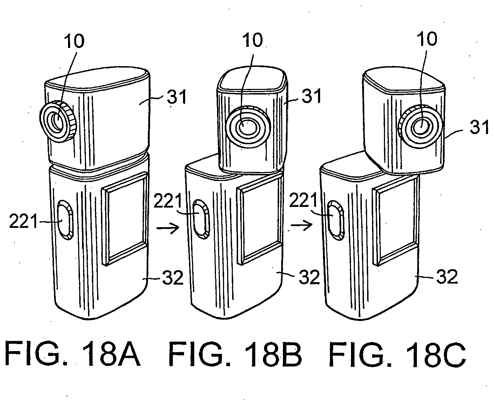

Thus, as the user holds the second cabinet 32 by one hand and depresses the shutter button 221 by a finger tip, the first cabinet 31 gradually rotates from a state as shown in FIG. 18A to a state as shown in FIG. 18B so as to shift the image pickup direction. As the user keeps on depressing the shutter button 221, the first cabinet 31 rotates to further shift the image pickup direction as shown in FIG. 18C. In other words, the first cabinet 31 is designed to rotate around the rotary shaft 38 that is linked to it in order to gradually shift the image pickup direction of the image pickup section 10.

It may be so arranged that the rotary motion of the motor 51 is suppressed by the photo-interrupter 52 and the first cabinet 31 is driven to rotate in the opposite direction when the user further keeps on depressing the shutter button 221 in the state illustrated in FIG. 18C.

The second cabinet 32 contains massive components such as the battery 44 and the motor 51 and the second electronic circuit 42 comprising a large number of circuits. On the other hand, the first cabinet 31 contains less massive components such as the lens section 10a, the CMOS image sensor 11 and the first electronic circuit 41 that are necessary for shooting operations. In short, the first cabinet 31 is less heavy than the second cabinet 32. Therefore, it is possible to reduce the mechanical load of the components necessary for driving the first cabinet 31 to rotate such as the rotary shaft 38, the bearing 55 as well as the motor 51. Thus, it is possible to realize a commercially feasible digital camera having a functional feature of taking a panoramic picture at low cast.

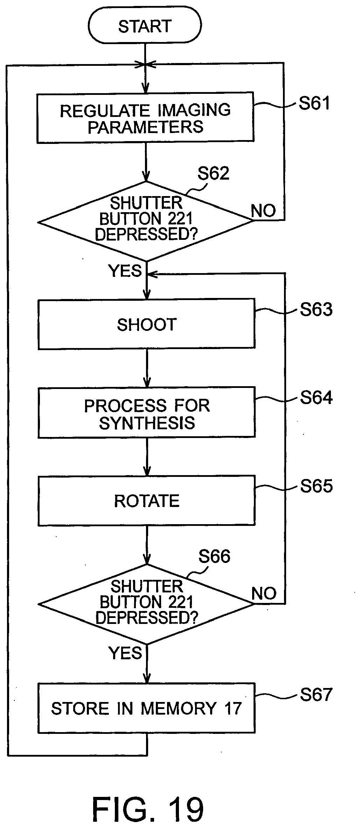

FIG. 19 is a flow chart of the shooting operation of the image pickup apparatus 3.

Referring to FIG. 19, the image pickup apparatus 3 diagnoses and initializes the hardware and then proceeds to Step S61.

In Step S 61, the user regulates the aperture and the exposure, utilizing the automatic exposure adjustment feature of the apparatus as in the case of any ordinary camera. As a result, the various imaging parameters are determined.

Then, in Step S62, the apparatus checks the status of the shutter button 221 to identify the timing of starting a shooting operation. If the shutter button 221 is depressed, it proceeds to Step S63. If the shutter button 221 is not depressed, on the other hand, it returns to Step S61.

After proceeding to Step S63, the image pickup section 10 picks up images of the object of shooting. The data acquired as a result of the shooting operation are transferred to the DSP 15 by way of the CDS circuit 12 and the A/D converter section 13.

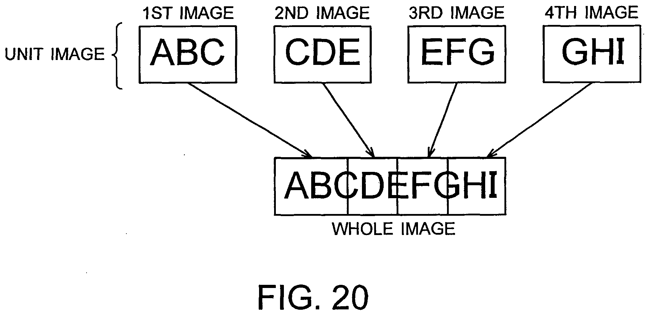

In Step S64, a panoramic whole image of the object of shooting is synthesized as the DSP 15 executes an image synthesizing process. FIG. 20 illustrates how a panoramic whole image is synthesized by bonding continuously picked up images. Note that the unit images that are obtained as a result of continuous shooting operation have overlapping areas. The unit images are put together by means of a known synthesizing method to produce a whole image as shown in FIG. 20. A synthesizing technique such as alpha blending may be used for the purpose of embodiments of the invention.

Then, in Step S65, the first cabinet 31 is driven to rotate relative to the second cabinet 32 so as to slightly shift the image pickup direction of the image pickup apparatus 10. The quantity of rotation of the first cabinet 31 is so regulated as to produce overlapping areas at least in the unit images that are picked up continuously. The quantity of rotation can be determined in advance by means of geometrical computations at the time of designing the image pickup apparatus 3. Alternatively, the image pickup apparatus 3 may be provided with a functional feature of detecting the quantity of the swinging motion of the apparatus in the shooting operation so as to dynamically and finely adjust the quantity of rotation of the first cabinet 31.

The smallest possible quantity of rotation of the motor 51 may be selected and the number of images to be picked up per unit time may be increased for continuous shooting in Step S65 in order to minimize the distortion of the object of shooting that can be produced by parallax and the discontinuity of the unit images that can appear when the object of shooting contains one or more than one moving objects. Then, it is possible to synthetically produce a high quality whole image. It is necessary to control the motor 51 so as to drive it to rotate intermittently and highly precisely for such a shooting operation. However, since the first cabinet 31 is much lighter than the second cabinet 32, it is possible to control the motor 51 accurately at low cost.

In Step S66, the apparatus checks the status of the shutter button 221 to identify the timing of ending the shooting operation. If it is found in Step S66 that the shutter button 221 is being depressed, the apparatus returns to Step S63 to continue the shooting operation. If, on the other hand, it is found in Step S66 that the shutter button 221 is not being depressed anymore, the apparatus proceeds to Step S67 to end the shooting operation.

In Step S67, the synthesized panoramic whole image is stored in the memory 17 as a process that needs to be executed to end a shooting operation.

Thus, as described above, the user of the second embodiment can issue a command for starting a shooting operation and a command for ending a shooting operation only by moving a finger tip because the shutter button 221 is arranged on the second cabinet 32 that is separated from the first cabinet 31. Additionally, the user can visually confirm the obtained image without any problem because the display section 43 is also arranged on the second cabinet 32.

Still additionally, only a small number of components including the lens section 10a and the CMOS image sensor 11 that are generally required for shooting operations are mounted in the first cabinet 31 that rotates in order to reduce the weight of the rotating part of the image pickup apparatus. Thus, it is possible to reduce the cost of the components for supporting the part of the first cabinet 31 that rotates and the motor 51 for driving that. The motor 51 and other components that operate as drive source are mounted in the second cabinet 32 that is held by the user so that the influence of the vibrations that can be produced when the motor 51 is driven to rotate can be minimized.

Since the rotary range of the first cabinet 31 is limited by means of the photo-interrupter 52, it is possible to transmit data from the part that rotates to the part that support the former part and vice versa by means of flexible wires that are popularly being used for ordinary movable objects without using a photo-coupler and related special joint members.

The image pickup apparatus 3 may be provided with all the functional features of the image pickup apparatus 1. Then, it is possible to build an image pickup system that provides the above described advantages of the image pickup apparatus 3 and those of the image pickup apparatus 1 including the improved image quality that is achieved by partly and sequentially superposing cut out strip-shaped image regions and the low cost in a synergetic way.

The second embodiment of image pickup apparatus 3 according to the second embodiment of the invention is by no means limited to the above-described arrangement, which can be modified in various different ways so long as at least one of the DSP 15, the CPU 21, the display section 43, the motor 51, the operation section 22 (shutter button 221) and the battery 44 is mounted in the second cabinet 32.

In an actual shooting operation, the image pickup apparatus 3 automatically repeats the processes from the first step to the third step as shown below.

1st Step: The camera is rigidly secured in position, stopping the motor, in order to prevent or at least significantly reduce the camera from shaking.
2nd Step: Start a shooting operation.
3rd Step: Shift the camera angle by means of the motor.

Strictly speaking, it is difficult to rigorously carry out the three steps. The camera has a certain amount of mass and, when the camera is driven to rotate by means of the motor, it cannot be stopped instantaneously because of the law of inertia. In other words, it is not possible to restore the state of the 1st step immediately after the 3rd step. Then, the 2nd step has to be started while the camera is still shaking, if slightly. Then, the images obtained in the 2nd step may be blurred, if slightly. The blurs are attributable to the law of inertia and directional in a direction same as the direction in which the motor is trying to move the camera in the 3rd step. However, the problem that the camera is shaken in the direction same as the direction in which the camera moves while shooting the object can be solved in a manner below.

The image pickup apparatus 3 is adapted to execute an anisotropic filtering process on each of the images of the cut out image regions or the generated whole image in order to make the blurs of the images unnoticeable if such blurs arise when the single panoramic whole image is synthesized by bonding the continuously picked up unit images together.

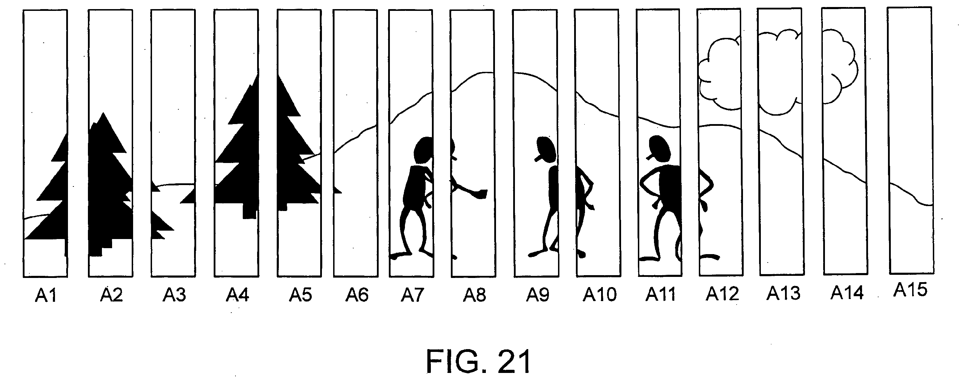

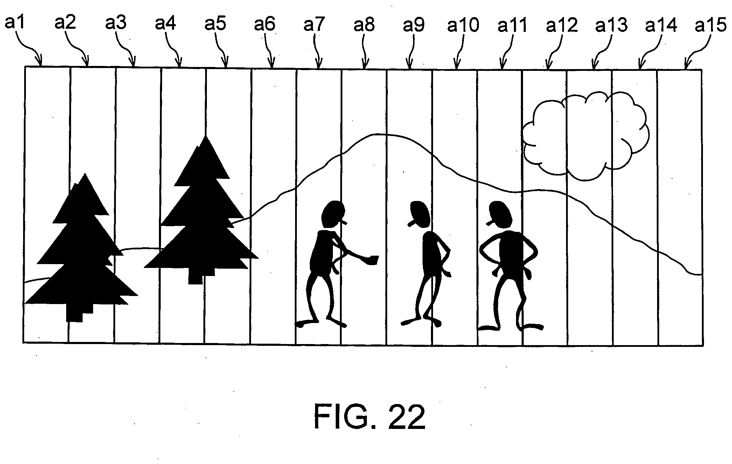

For example, when the image pickup apparatus 3 of this embodiment is operated for an image pickup operation, while panning it horizontally, to obtain images of cut out image regions, or unit images A 1, A2, ..., A15, as shown in FIG. 21 and subsequently synthesize a panoramic image from images a1 through a15 that correspond to the unit images A1 through A15 as shown in FIG. 22, small blurs arise in the horizontal direction. Therefore, a filtering process is introduced to emphasize a high band component only in the horizontal direction.

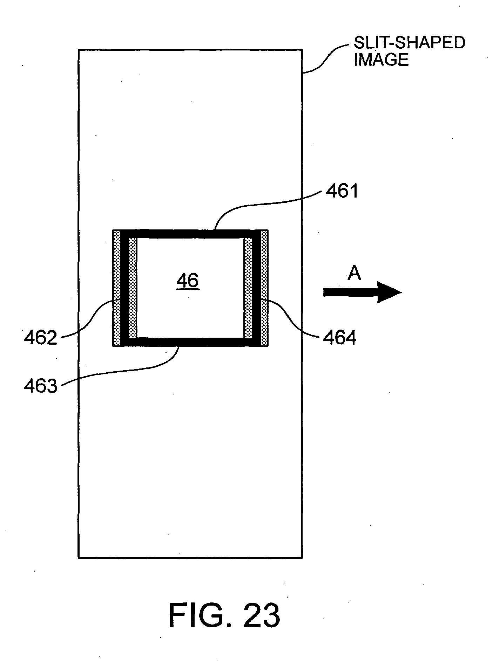

FIG. 23 illustrates a specific example of the process. FIG. 23 illustrates the data of a picked up image (a strip-shaped image). In FIG. 23, arrow A indicates the direction in which the image pickup apparatus 3 is driven to rotate. To make the following description of blur easily understandable, assume here that a square object is shot by the image pickup apparatus 3. Thus, reference symbol 46 denotes a projected image of the square object. The projected image 46 is blurred in the direction of arrow A. More specifically, of the four edges 461 through 464 of the projected image 46, the top edge 461 and the bottom edge 463 are sharp, while the right edge 462 and the left edge 464 are blurred.

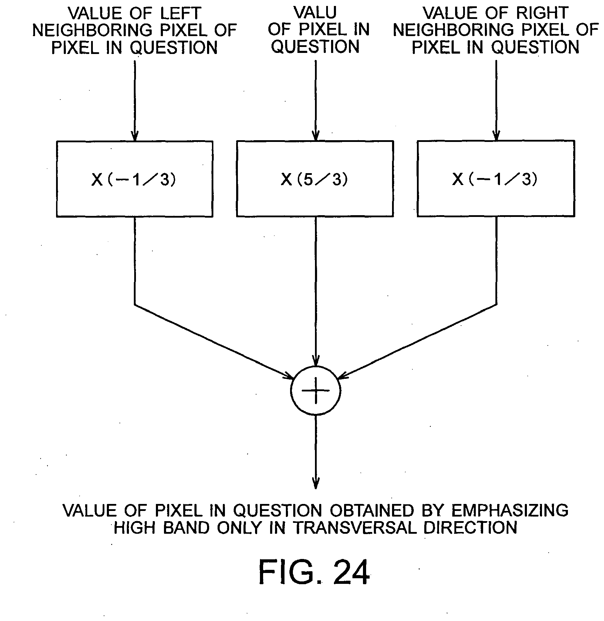

Thus, a filtering process is introduced to emphasize a high band in the direction of arrow A (transversal direction). For the filter to be used for emphasizing a high band, it may be only necessary to compute (-1/3) $\times$ (pixel value of left neighboring pixel of pixel in question)) + (5/3) $\times$ (pixel value of pixel in question) + (-1/3) $\times$ (pixel value of right neighboring pixel of pixel in question) as shown in FIG. 24.

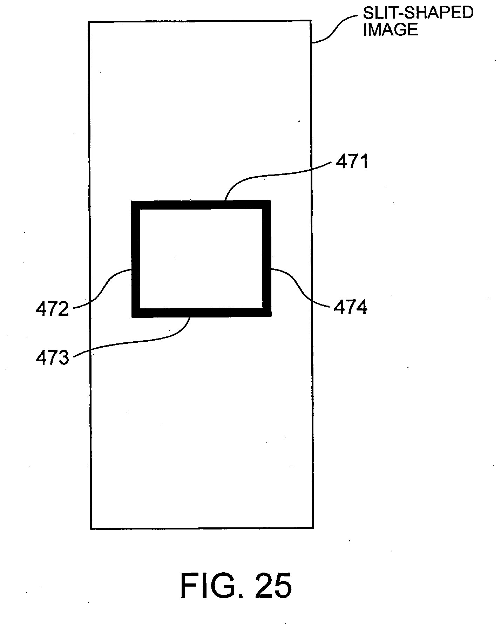

Then, as a result, the image data of FIG. 23 becomes the image data of FIG. 25. In FIG. 25, it will be seen that the top edge 471 and the bottom edge 473 that correspond respectively to the top edge 461 and the bottom edge 463 remain sharp and the right edge 472 and the left edge 474 that correspond respectively to the right edge 462 and the left edge 464 become sharp.

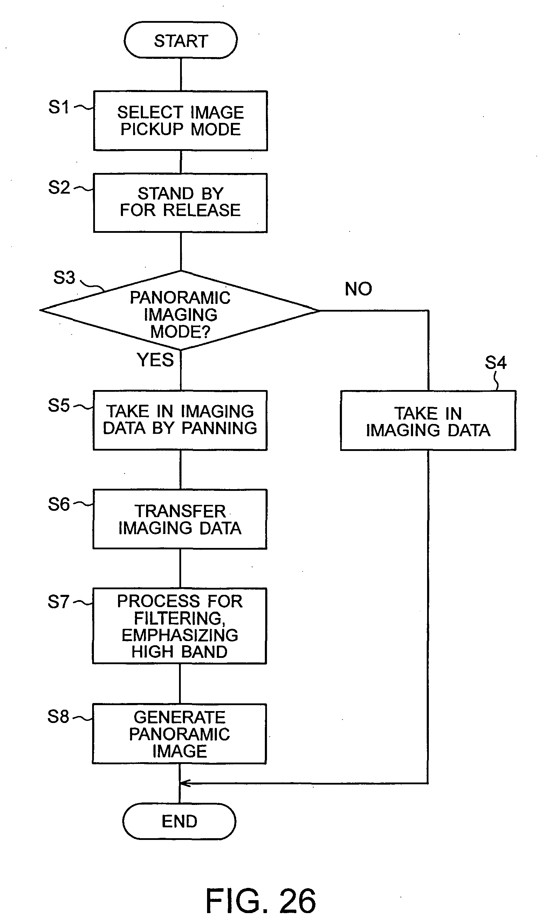

On the basis of the above theory, the image pickup apparatus 3 of this embodiment generates a panoramic image, following the process of the flow chart of FIG. 26.

More specifically, firstly in Step S71, the user selects whether the ordinary image pickup mode or the panoramic image pickup mode (mode selection). Then, the apparatus 3 proceeds to Step S72.

In Step S72, the apparatus 3 stands by until the user depresses the release button (shutter button). The apparatus 3 proceeds to Step S73 when the release button is depressed.

In Step S73, the mode selected in Step S71 is identified. Then, the apparatus 3 proceeds to Step S74 when the ordinary image pickup mode is identified, whereas it proceeds to Step S75 when the panoramic image pickup mode is identified.

The following operation takes place in Step S74. The CMOS image sensor 11 is driven to operate by a driver (not shown) and the image signal of a frame is output as serial data. The output signal is converted into a digital signal by the A/D converter section 13 and subsequently transmitted to the DSP 15. In this way, the output signals of the CMOS image sensor 11 are sequentially transmitted to the DSP 15. The DSP 15 executes various processes including separation of the color components in the signals, gain control, gamma correction, color balance adjustment and matrix operations for the signal components. The processed video signals are stored in the memory 17.

On the other hand, the following operation takes place in Step S75. The CMOS image sensor 11 is driven to operate by a driver (not shown) and the image signal of a frame is output as serial data. The output signal is converted into a digital signal by the A/D converter 13 and subsequently transmitted to the DSP 15. In this way, the output signals of the CMOS image sensor 11 are sequentially transmitted to the DSP 15. The DSP 15 takes out only a part (a strip-shaped oblong region) of each signal transmitted from the A/D converter section 13 and executes various processes on the taken out part including separation of the color components in the signals, gain control, gamma correction, color balance adjustment and matrix operations for the signal components. The processed video signals are stored in the memory 17. At this time, the CPU 21 transmits a rotary signal to the motor 24 as control signal as an operation interlocked with the operation of writing the video signals in the memory 17. The motor 24 drives the first cabinet 31 of the image pickup apparatus 3 to pan at a constant rate in synchronism with the rotary signal. After the Step S75, the apparatus 3 proceeds to Step S76.

In Step S76, the CPU 21 transfers the data on the strip-shaped images stored in the memory 17 back to the DSP 15. Then, the apparatus 3 proceeds to Step S77.

In Step S77, the DSP 15 makes the images to pass through the high band emphasizing filter that is directional in the rotary direction of the camera. After Step S77, the apparatus 3 proceeds to Step S78.

In Step S78, the DSP 15 generates a panoramic image by bonding the strip-shaped images. The CPU 21 writes the data of the generated panoramic image in the memory 17 in a predetermined format. The series of processing steps ends at Step S78. The data of the panoramic image are held in the memory 17 after the end of the operation.

The high band emphasizing filtering process that is executed on each of the picked up images (strip-shaped images) may be replaced by a high band emphasizing filtering process that is executed by the DSP 15 on the panoramic image produced by bonding the strip-shaped images and read out from the memory 17.

Thus, a panoramic image that is free from blurs can be produced in the panoramic image pickup mode and the data of the panoramic image can be stored in the memory 17.

As described above, when a plurality of images are picked up, while turning the shooting direction (or the position) of the camera, a high band emphasizing filtering operation is conducted in the direction (in which the camera is driven to rotate or move in the continuous shooting operation and which is referred to as the first direction) in order to compensate the blurs that can be produced during the shooting operation. As a result, it is possible to produce an image where blurs are not noticeable. The direction of the high band emphasizing filtering operation is only the first direction and not in a direction perpendicular to the first direction (to be referred to as the second direction). The pickup images do not blur in the second direction. If the high band emphasizing filtering operation is conducted in the second direction, disagreeable images (images where only edges are overshot or undershot and/or images with an enhanced noise level) can be produced. However, according to embodiments of the invention, since a high band emphasizing filtering operation is conducted only in the first direction, such a problem does not arise.

It should be understood by those skilled in the art that various modifications, combinations sub-combinations and alterations may occur depending on design requirements and other factors insofar as they are within the scope of the appended claims. In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Various respective aspects and features of the invention are defined in the appended claims.

**Claims**

1. An image pickup apparatus comprising:

    image pickup means for picking up images, each image constituting a part of the scenic range to be imaged, by sequentially shifting the image pickup direction;
    image cutting out means for cutting out image regions of a predetermined size, the image regions constituting overlapping parts of the images picked up by the image pickup means
    whole image generation means for sequentially and partly superposing the image regions cut out by the image cutting out means to generate a whole image of the whole scenic range on the basis of the sum of the corresponding overlapping parts; and
    display means for displaying the whole image generated by the whole image generation means on the display screen thereof;
    the display means being adapted to scroll the whole image to display the newly superposed image region with priority when the generated whole image overflows from the display screen.

2. The apparatus according to claim 1, wherein the whole image generation means is adapted to uniformize the luminance components of the image regions to be superposed in a direction perpendicular to the image pickup direction and make the positions of the unit images according to the unformized distribution of the luminance components.

3. The apparatus according to claim 1, wherein the image pickup means is adapted to shift the image pickup direction at an angular velocity that monotonously decreases relative to the exposure time of the image pickup operation.

4. The apparatus according to claim 1, wherein the image pickup means is adapted to shift the image pickup direction at an angular velocity that is inversely proportional to the exposure time of the image pickup operation.

5. The apparatus according to claim 1, further comprising:

    detection means for detecting an operation signal generated according to a depressing operation of the user;
    the image pickup means being adapted to perform the image pickup operation when an operation signal is detected by the detection means and stops the image pickup operation when the operation signal is no longer detected by the detection means.

6. The apparatus according to claim 5, wherein, when a new unit image is picked up after the image pickup operation is stopped by the image pickup means, the whole image generation means generates the whole image by bonding the unit images to the image regions.

7. The apparatus according to claim 1, wherein the whole image generation means is adapted to execute an anisotropic filtering process on the images of the image regions cut out by the image cutting out means.

8. The apparatus according to claim 1, wherein the whole image generation means is adapted to execute an anisotropic filtering process on the generated whole image.

9. The apparatus according to claim 7 or 8, wherein the anisotropic filtering process is a filtering process for emphasizing only a high band in the direction in which the image pickup means is driven to rotate or move.

10. An image pickup method comprising:

an image pickup step of picking up images, each image constituting a part of the scenic range to be imaged, by sequentially shifting the image pickup direction;
an image cutting out step of cutting out image regions of a predetermined size, the image regions constituting overlapping parts of the images picked up in the image pickup step;
a whole image generation step of sequentially and partly superposing the image regions cut out in the image cutting out step to generate a whole image of the whole scenic range on the basis of the sum of the corresponding overlapping parts; and
a display step of displaying the whole image generated in the whole image generation step on a display screen; the display step being adapted to scroll the whole image to display the newly superposed image region with priority when the generated whole image overflows from the display screen.

11. The method according to claim 10, wherein the whole image generation step is adapted to uniformize the luminance components of the image regions to be superposed in a direction perpendicular to the image pickup direction and make the positions of the unit images according to the unformized distribution of the luminance components.

12. The method according to claim 10, wherein the image pickup step is adapted to shift the image pickup direction at an angular velocity that monotonously decreases relative to the exposure time of the image pickup operation.

13. The method according to claim 10, wherein the image pickup step is adapted to shift the image pickup direction at an angular velocity that is inversely proportional to the exposure time of the image pickup operation.

14. The method according to claim 10, further comprising:

a detection step of detecting an operation signal generated according to a depressing operation of the user; the image pickup step being adapted to perform the image pickup operation when an operation signal is detected in the detection step and stops the image pickup operation when the operation signal is no longer detected in the detection step.

15. The method according to claim 11, wherein, when a new unit image is picked up after the image pickup operation is stopped in the image pickup step, the whole image is generated in the whole image generation step by bonding the unit images to the image regions.

16. The method according to claim 10, wherein the whole image generation step is adapted to use the sum of the pixel values of the pixels of the superposed image regions located at a same pixel position as the numerator data and the number of superposed image regions at the same pixel position as the denominator data.

17. The method according to claim 10, wherein the whole image generation step is adapted to execute an anisotropic filtering process on the images of the image regions cut out in the image cutting out step.

18. The method according to claim 10, wherein the whole image generation step is adapted to execute an anisotropic filtering process on the generated whole image.

19. The method according to claim 18, wherein the anisotropic filtering process is a filtering process for emphasizing only a high band in the rotating direction or the moving direction.

**Patentansprüche**

1. Vorrichtung zur Bildaufnahme, umfassend:

Bildaufnahmemittel zum Aufnehmen von Bildern, wobei jedes Bild einen Teil eines abzubildenden Bildbereichs ist, indem die Bildaufnahmerichtung sequenziell verschoben wird;

Bildausschneidemittel zum Ausschneiden von Bildregionen einer vordefinierten Größe, wobei die Bildregionen einander überlappende Teile der vom Bildaufnahmemittel aufgenommenen Bilder darstellen,

Komplettbilderzeugungsmittel zum sequenziellen, teilweisen Überlagern der vom Bildausschneidemittel ausgeschnittenen Bildregionen, um ein Komplettbild des gesamten Bildbereichs auf Basis der Summe der entsprechenden überlappenden Teile zu erzeugen; und

Anzeigemittel zum Anzeigen des vom Komplettbilderzeugungsmittel erzeugten Komplettbildes auf dem Anzeigebildschirm desselben;

wobei das Anzeigemittel dafür ausgelegt ist, durch das Komplettbild zu rollen, um die neu überlagerte Bildregion mit Priorität anzuzeigen, wenn das erzeugte Komplettbild über den Rand des Anzeigebildschirms hinaus fließt.

2. Vorrichtung gemäß Anspruch 1, wobei das Komplettbilderzeugungsmittel dafür ausgelegt ist, die Luminanzkomponenten der zu überlagernden Bildregionen in einer Richtung rechtwinklig zur Bildaufnahmerichtung zu vereinheitlichen und die Positionen der Einheitenbilder gemäß der vereinheitlichten Verteilung der Luminanzkomponenten herzustellen.

3. Vorrichtung gemäß Anspruch 1, wobei das Bildaufnahmemittel dafür ausgelegt ist, die Bildaufnahmerichtung mit einer Winkelgeschwindigkeit zu verschieben, die relativ zur Belichtungszeit der Bildaufnahmeoperation monoton abnimmt.

4. Vorrichtung gemäß Anspruch 1, wobei das Bildaufnahmemittel dafür ausgelegt ist, die Bildaufnahmerichtung mit einer Winkelgeschwindigkeit zu verschieben, die umgekehrt proportional zur Belichtungszeit der Bildaufnahmeoperation ist.

5. Vorrichtung gemäß Anspruch 1, ferner umfassend:

Erkennungsmittel zum Erkennen eines Operationssignals, das entsprechend einer Niederdrückoperation des Benutzers erzeugt wird;

wobei das Bildaufnahmemittel dafür ausgelegt ist, die Bildaufnahmeoperation durchzuführen, wenn vom Erkennungsmittel ein Operationssignal erkannt wird, und die Bildaufnahmeoperation beendet, wenn das Operationssignal vom Erkennungsmittel nicht mehr erkannt wird.

6. Vorrichtung gemäß Anspruch 5, wobei, wenn ein neues Einheitenbild aufgenommen wird, nachdem die Bildaufnahmeoperation durch das Bildaufnahmemittel beendet wurde, das Komplettbilderzeugungsmittel das Komplettbild erzeugt, indem die Einheitenbilder mit den Bildregionen verbunden werden.

7. Vorrichtung gemäß Anspruch 1, wobei das Komplettbilderzeugungsmittel dafür ausgelegt ist, einen anisotropen Filterprozess an den vom Bildausschneidemittel ausgeschnittenen Bildern der Bildregionen durchzuführen.

8. Vorrichtung gemäß Anspruch 1, wobei das Komplettbilderzeugungsmittel dafür ausgelegt ist, einen anisotropen Filterprozess an dem erzeugten Komplettbild durchzuführen.

9. Vorrichtung gemäß Anspruch 7 oder 8, wobei der anisotrope Filterprozess ein Filterprozess ist, um nur ein oberes Band in der Richtung, in der das Bildaufnahmemittel gedreht oder verschoben wird, hervorzuheben.

10. Bildaufnahmeverfahren, umfassend:

einen Bildaufnahmeschritt des Aufnehmens von Bildern, wobei jedes Bild einen Teil eines abzubildenden Bildbereichs ist, indem die Bildaufnahmerichtung sequenziell verschoben wird;

einen Bildausschneideschritt des Ausschneidens von Bildregionen einer vordefinierten Größe, wobei die Bildregionen einander überlappende Teile der im Bildaufnahmeschritt aufgenommenen Bilder bilden;

einen Komplettbilderzeugungsschritt des sequenziellen, teilweisen Überlagerns der im Bildausschneideschritt ausgeschnittenen Bildregionen, um ein Komplettbild des gesamten Bildbereichs auf Basis der Summe der entsprechenden überlappenden Teile zu erzeugen; und

einen Anzeigeschritt des Anzeigens des im Komplettbilderzeugungsschritt erzeugten Komplettbildes auf dem Anzeigebildschirm;

wobei der Anzeigeschritt dafür ausgelegt ist, durch das Komplettbild zu rollen, um die neu überlagerte Bildregion mit Priorität anzuzeigen, wenn das erzeugte Komplettbild über den Rand des Anzeigebildschirms hinaus fließt.

11. Verfahren gemäß Anspruch 10, wobei der Komplettbilderzeugungsschritt dafür ausgelegt ist, die Luminanzkomponenten der zu überlagernden Bildregionen in einer Richtung rechtwinklig zur Bildaufnahmerichtung zu vereinheitlichen und die Positionen der Einheitenbilder gemäß der vereinheitlichten Verteilung der Luminanzkomponenten herzustellen.

12. Verfahren gemäß Anspruch 10, wobei der Bildaufnahmeschritt dafür ausgelegt ist, die Bildaufnahmerichtung mit einer Winkelgeschwindigkeit zu verschieben, die relativ zur Belichtungszeit der Bildaufnahmeoperation monoton abnimmt.

13. Verfahren gemäß Anspruch 10, wobei der Bildaufnahmeschritt dafür ausgelegt ist, die Bildaufnahmerichtung mit einer Winkelgeschwindigkeit zu verschieben, die umgekehrt proportional zur Belichtungszeit der Bildaufnahmeoperation ist.

14. Verfahren gemäß Anspruch 10, ferner umfassend:

einen Erkennungsschritt des Erkennens eines Operationssignals, das entsprechend einer Niederdrückoperation des Benutzers erzeugt wird;
wobei der Bildaufnahmeschritt dafür ausgelegt ist, die Bildaufnahmeoperation durchzuführen, wenn im Erkennungsschritt ein Operationssignal erkannt wird, und das die Bildaufnahmeoperation beendet, wenn das Operationssignal im Erkennungsschritt nicht mehr erkannt wird.

15. Verfahren gemäß Anspruch 11, wobei, wenn ein neues Einheitenbild aufgenommen wird, nachdem die Bildaufnahmeoperation im Bildaufnahmeschritt beendet wurde, im Komplettbilderzeugungsschritt das Komplettbild erzeugt wird, indem die Einheitenbilder mit den Bildregionen verbunden werden.

16. Verfahren gemäß Anspruch 10, wobei der Komplettbilderzeugungsschritt dafür ausgelegt ist, die Summe der Bildpunktwerte der Bildpunkte der überlagerten Bildregionen, die sich an derselben Bildpunktposition befinden, als Zählerdaten und die Anzahl der überlagerten Bildregionen an derselben Bildpunktposition als Nennerdaten zu verwenden.

17. Verfahren gemäß Anspruch 10, wobei der Komplettbilderzeugungsschritt dafür ausgelegt ist, einen anisotropen Filterprozess an den im Bildausschneideschritt ausgeschnittenen Bildern der Bildregionen durchzuführen.

18. Verfahren gemäß Anspruch 10, wobei der Komplettbilderzeugungsschritt dafür ausgelegt ist, einen anisotropen Filterprozess an dem erzeugten Komplettbild durchzuführen.

19. Verfahren gemäß Anspruch 18, wobei der anisotrope Filterprozess ein Filterprozess ist, um nur ein oberes Band in der Drehrichtung oder Verschiebungsrichtung hervorzuheben.

**Revendications**

1. Appareil de capture d'image comprenant :

un moyen de capture d'image pour capturer des images, chaque image constituant une partie de la plage scénique devant être imagée, par décalage séquentiel de la direction de capture d'image ;
un moyen de découpage d'image pour découper des régions d'image d'une taille prédéterminée, les régions d'image constituant des parties se chevauchant des images capturées par le moyen de capture d'image ;
un moyen de génération d'image entière pour superposer séquentiellement et partiellement les régions d'image découpées par le moyen de découpage d'image pour générer une image entière de la plage scénique entière sur la base de la somme des parties se chevauchant correspondantes ; et
un moyen d'affichage pour afficher l'image entière générée par les moyens de génération d'image entière sur l'écran d'affichage de celui-ci ;
le moyen d'affichage étant adapté pour faire défiler l'image entière pour afficher la région d'image nouvellement superposée avec une priorité lorsque l'image entière générée déborde de l'écran d'affichage.

**2.** Appareil selon la revendication 1, le moyen de génération d'image entière étant adapté pour uniformiser les composantes de luminance des régions d'image à superposer dans une direction perpendiculaire à la direction de capture d'image, et rendre les positions des images unitaires en fonction de la distribution uniformisée des composantes de luminance.

**3.** Appareil selon la revendication 1, dans lequel le moyen de capture d'image est adapté pour décaler la direction de capture d'image à une vitesse angulaire qui diminue de manière monotone par rapport au temps d'exposition de l'opération de capture d'image.

**4.** Appareil selon la revendication 1, dans lequel le moyen de capture d'image est adapté pour décaler la direction de capture d'image à une vitesse angulaire qui est inversement proportionnelle au temps d'exposition de l'opération de capture d'image.

**5.** Appareil selon la revendication 1, comprenant en outre :

un moyen de détection pour détecter un signal d'opération généré en fonction d'une opération d'enfoncement par l'utilisateur ;
le moyen de capture d'image étant adapté pour effectuer l'opération de capture d'image lorsqu'un signal d'actionnement est détecté par le moyen de détection et arrêter l'opération de capture d'image lorsque le signal d'actionnement n'est plus détecté par le moyen de détection.

**6.** Appareil selon la revendication 5, dans lequel, lorsqu'une nouvelle image unitaire est capturée après que l'opération de capture d'image est arrêtée par le moyen de capture d'image, le moyen de génération d'image entière génère l'image entière par liaison des images unitaires aux régions d'image.

**7.** Appareil selon la revendication 1, dans lequel le moyen de génération d'image entière est adapté pour exécuter un processus de filtrage anisotrope sur les images des régions d'image découpées par le moyen de découpage d'image.

**8.** Appareil selon la revendication 1, le moyen de génération d'image étant adapté pour exécuter un processus de filtrage anisotrope sur l'image entière générée.

**9.** Appareil selon la revendication 7 ou 8, le processus de filtrage anisotrope étant un processus de filtrage pour mettre en valeur uniquement une bande haute dans la direction dans laquelle le moyen de capture d'image est entraîné pour tourner ou se déplacer.

**10.** Procédé de capture d'image comprenant :

une étape de capture d'image consistant à capturer des images, chaque image constituant une partie de la plage scénique devant être imagée, par décalage séquentiel de la direction de capture d'image ;
une étape de découpage d'image consistant à découper des régions d'image d'une taille prédéterminée, les régions d'image constituant des parties se chevauchant des images capturées pendant l'étape de capture d'image ;
une étape de génération d'image entière consistant à superposer séquentiellement et partiellement les régions d'image découpées pendant l'étape de découpage d'image pour générer une image entière de la plage scénique entière sur la base de la somme des parties se chevauchant correspondantes ; et
une étape d'affichage consistant à afficher l'image entière générée pendant l'étape de génération d'image entière sur un écran d'affichage ;
l'étape d'affichage étant adaptée pour faire défiler l'image entière pour afficher la région d'image nouvellement superposée avec une priorité lorsque l'image entière générée déborde de l'écran d'affichage.

**11.** Procédé selon la revendication 10, l'étape de génération d'image entière étant adaptée pour uniformiser les composantes de luminance des régions d'image à superposer dans une direction perpendiculaire à la direction de capture d'image, et rendre les positions des images unitaires en fonction de la distribution uniformisée des composantes de luminance.

**12.** Procédé selon la revendication 10, dans lequel l'étape de capture d'image est adaptée pour décaler la direction de capture d'image à une vitesse angulaire qui diminue de manière monotone par rapport au temps d'exposition de l'opération de capture d'image.

**13.** Procédé selon la revendication 10, dans lequel l'étape de capture d'image est adaptée pour décaler la direction de capture d'image à une vitesse angulaire qui est inversement proportionnelle au temps d'exposition de l'opération de capture d'image.

**14.** Procédé selon la revendication 10, comprenant en outre :

une étape de détection consistant à détecter un signal d'opération généré en fonction d'une opération d'enfoncement par l'utilisateur ;

l'étape de capture d'image étant adaptée pour effectuer l'opération de capture d'image lorsqu'un signal d'actionnement est détecté pendant l'étape de détection et arrêter l'opération de capture d'image lorsque le signal d'actionnement n'est plus détecté pendant l'étape de détection.

**15.** Procédé selon la revendication 11, dans lequel, lorsqu'une nouvelle image unitaire est capturée après que l'opération de capture d'image est arrêtée pendant l'étape de capture d'image, l'image entière est générée pendant l'étape de génération d'image entière par liaison des images unitaires aux régions d'image.

**16.** Procédé selon la revendication 10, l'étape de génération d'image entière étant adaptée pour utiliser la somme des valeurs de pixel des pixels des régions d'image superposées situées à une même position de pixel comme données de numérateur et le nombre de régions d'image superposées à la même position de pixel comme données de dénominateur.

**17.** Procédé selon la revendication 10, dans lequel l'étape de génération d'image entière est adaptée pour exécuter un processus de filtrage anisotrope sur les images des régions d'image découpées pendant l'étape de découpage d'image.

**18.** Procédé selon la revendication 10, l'étape de génération d'image entière étant adaptée pour exécuter un processus de filtrage anisotrope sur l'image entière générée.

**19.** Procédé selon la revendication 18, le processus de filtrage anisotrope étant un processus de filtrage pour mettre en valeur uniquement une bande haute dans la direction de rotation ou la direction de déplacement.

FIG. 1

EP 1 587 031 B1

FIG. 2A

FIG. 2B

BONDING

IMAGING PLANE OF CMOS
IMAGE SENSOR 11

ABCDE

FGHIJK

LMNOP

QRSTU

VWXYZ

LARGE VOLUME TO
BE TRANSFERRED

ABCDE

FGHIJK

LMNOP

QRSTU

17~ VWXYZ

IMAGE DATA TRANSFERRED
ONTO MEMORY

TECHNIQUE A

IMAGING PLANE OF CMOS
IMAGE SENSOR 11

ABCDE

FGHIJK

LMNOP

QRSTU

VWXYZ

SMALL VOLUME TO
BE TRANSFERRED

BCI

HI

IN

17~ RST

VX

IMAGE DATA TRANSFERRED
ONTO MEMORY

TECHNIQUE B

FIG. 3

FIG. 4

IMAGE PICKUP
DIRECTION

QUADRUPLED
STRIP WIDTH

IMAGE PICKUP
DIRECTION

TIME

TIME

OVERLAPPING
AREA

# FIG. 5

```
        ┌─────────┐
        │  MAIN   │
        └────┬────┘
             │
       ┌─────┤
       │     ▼
       │  ┌──────────────────┐
       │  │║ PROCESS        ║ │ ─ S1
       │  │║ IMAGING        ║ │
       │  │║ PARAMETERS     ║ │
       │  └────────┬─────────┘
       │           │
       │           ▼              ╱ S2
       │        ╱╲  SHUTTER  ╲
    No │     ╱   BUTTON        ╲
       └────╱   DEPRESSED?      ╲
            ╲                   ╱
             ╲                ╱
                ╲     Yes   ╱
                    │
                    ▼
        ┌──────────────────┐
        │ DRIVE MOTOR 24   │ ─ S3
        └────────┬─────────┘
                 │
                 ▼
        ┌──────────────────┐
        │║ PROCESS FOR    ║ │ ─ S4
        │║ PANORAMIC      ║ │
        │║ IMAGE          ║ │
        └────────┬─────────┘
                 │
                 ▼
        ┌──────────────────┐
        │ TURN OFF MOTOR   │ ─ S5
        └────────┬─────────┘
                 │
                 ▼
        ┌──────────────────┐
        │ PROCESS FOR      │ ─ S6
        │ BONDING AFTER    │
        │ ORDINARY         │
        │ SHOOTINGS        │
        └────────┬─────────┘
                 │
                 ▼
        ┌──────────────────┐
        │ PROCESS FOR      │ ─ S7
        │ RECORDING        │
        └────────┬─────────┘
                 │
                 ▼
            ┌─────────┐
            │   END   │
            └─────────┘
```

# FIG. 6

25

FIG. 7

PROCESS FOR
PICKING UP A
PANORAMIC IMAGE

PICK UP AN IMAGE — S21

PROCESS FOR
MATCHING — S22

PROCESS FOR
SUPERPOSING — S23

PROCESS FOR
DISPLAY — S24

S25

YES — SHUTTER
BUTTON BEING
DEPRESSED?

NO

END

FIG. 8

START OF
MATCHING
PROCESS

PREPROCESS
PICKED UP IMAGE — S31

USE LOW-PASS
FILTER FOR
RE-SAMPLING — S32

NORMALIZE
CANVAS IMAGE — S33

USE LOW-PASS
FILTER FOR
RE-SAMPLING — S34

PROCESS FOR
MATCHING — S35

END

FIG. 9

UNIFORMIZATION → ~Pa1

UNIFORMIZATION → ~Pa3

UNIFORMIZATION → ~Pa3

F1

F2

# FIG. 10

CANVAS IMAGE
R,G,B

·/·

CANVAS IMAGE
L
(NUMBER OF TIMES
OF SUPERPOSITION)

=

NORMALIZED IMAGE

} DIVISION 1

} DIVISION 2

} DIVISION 3

# FIG. 11

LFP, RE-SAMPLING

Pb1

LFP, RE-SAMPLING

Pb2

LFP, RE-SAMPLING

Pb3

# FIG. 12

IMAGE AT THE TIME
OF STARTING AN IMAGE
PICKUP OPERATION

~DISPLAY SCREEN OF
MONITOR SECTION 20

AFTER k SECONDS

A

AFTER 2k SECONDS

ABC

AFTER 3k SECONDS

ABCDE

AFTER 4k SECONDS

ABCDEFG

FIG. 13

STARTING
POINT

IMAGE PICKUP DIRECTION

IMAGE PICKED UP
BY TECHNIQUE B

IMAGE PICKED UP
BY TECHNIQUE A

TERMINUS

# FIG. 14

LENS SECTION 10a

A

SHUTTER BUTTON 221

3

FIRST CABINET 31

SECOND CABINET 32

DISPLAY SECTION 43

FIG. 15

B

CMOS SENSOR 11

41
FIRST
ELECTRONIC
CIRCUIT

FIRST
CABINET 31

10a

WIRING 56

ROTARY
SHAFT 38

SHUTTER
BUTTON
221

BEARING 55

SECOND
CABINET 32

SECOND
ELECTRONIC
CIRCUIT

MOTOR

STOPPER 54

52a

51

42

SHIELD
PLATE 53

52b

BATTERY

17 MEMORY

44

## FIG. 16A

11

FIRST
ELECTRONIC
CIRCUIT    41

WIRING 56

SECOND
ELECTRONIC
CIRCUIT    42    43

15

CMOS
SENSOR

CDS
CIRCUIT

A/D
CONVERTER
SECTION

DSP

MEMORY

DISPLAY
SECTION

12

13

17

INTER-
FACE

CPU

OPERATION
SECTION

221

47

21

22

## FIG. 16B

EP 1 587 031 B1

OUT OF
MOVABLE RANGE

WITHIN MOVABLE RANGE

OUT OF
MOVABLE RANGE

SHIELD PLATE
ROTARY SHAFT 38

LIGHT RECEIVING BODY 52b
PHOTO-INTERRUPTER 52

# FIG. 17

FIG. 18A    FIG. 18B    FIG. 18C

```
                    ┌─────────────┐
                    │    START    │
                    └──────┬──────┘
                           │
        ┌──────────────────┼──────────────────────┐
        │                  ▼                       │
        │        ┌──────────────────┐              │
        │        │ REGULATE IMAGING │─── S61       │
        │        │   PARAMETERS     │              │
        │        └────────┬─────────┘              │
        │                 ▼           S62          │
        │              ╱──────╲                    │
        │            ╱ SHUTTER  ╲      NO           │
        │           ╱ BUTTON 221  ╲─────────────┐  │
        │            ╲ DEPRESSED? ╱             │  │
        │              ╲──────╱                 │  │
        │               YES │                   │  │
        │                   ◄───────────────────┘  │
        │                   ▼                       │
        │        ┌──────────────────┐              │
        │        │      SHOOT       │─── S63       │
        │        └────────┬─────────┘              │
        │                 ▼                         │
        │        ┌──────────────────┐              │
        │        │   PROCESS FOR    │─── S64       │
        │        │    SYNTHESIS     │              │
        │        └────────┬─────────┘              │
        │                 ▼                         │
        │        ┌──────────────────┐              │
        │        │      ROTATE      │─── S65       │
        │        └────────┬─────────┘              │
        │                 ▼           S66           │
        │              ╱──────╲                    │
        │            ╱ SHUTTER  ╲      NO           │
        │           ╱ BUTTON 221  ╲────────────────┘
        │            ╲ DEPRESSED? ╱
        │              ╲──────╱
        │               YES │
        │                   ▼
        │        ┌──────────────────┐
        │        │ STORE IN MEMORY 17│─── S67
        │        └────────┬─────────┘
        └─────────────────┘
```

# FIG. 19

UNIT IMAGE {

1ST IMAGE

ABC

2ND IMAGE

CDE

3RD IMAGE

EFG

4TH IMAGE

GHI

ABCDEFGHI

WHOLE IMAGE

# FIG. 20

FIG. 21

EP 1 587 031 B1

FIG. 22

SLIT-SHAPED IMAGE

461

46

A

462
463
464

FIG. 23

VALUE OF LEFT
NEIGHBORING PIXEL OF
PIXEL IN QUESTION

VALU
OF PIXEL IN
QUESTION

VALUE OF RIGHT
NEIGHBORING PIXEL OF
PIXEL IN QUESTION

$X(-1/3)$

$X(5/3)$

$X(-1/3)$

$+$

VALUE OF PIXEL IN QUESTION OBTAINED BY EMPHASIZING
HIGH BAND ONLY IN TRANSVERSAL DIRECTION

# FIG. 24

SLIT-SHAPED
IMAGE

471

472

474

473

# FIG. 25

START

S1 — SELECT IMAGE
PICKUP MODE

S2 — STAND BY
FOR RELEASE

S3 — PANORAMIC
IMAGING
MODE?

NO

YES

S4

S5 — TAKE IN IMAGING
DATA BY PANNING

TAKE IN
IMAGING DATA

S6 — TRANSFER
IMAGING DATA

S7 — PROCESS FOR
FILTERING,
EMPHASIZING
HIGH BAND

S8 — GENERATE
PANORAMIC
IMAGE

END

FIG. 26

**EP 1 587 031 B1**

**REFERENCES CITED IN THE DESCRIPTION**

**Patent documents cited in the description**

- JP 2004122176 A
- JP 2005021893 A
- JP 11046317 A
- JP 6225202 A
- JP 3348285 B
- US 6133943 A
- EP 0534438 A2